# EUROPEAN PATENT APPLICATION

(11) **EP 2 546 563 A1**
(43) Date of publication of application: **16.01.2013**
(21) Application number: 11771802.3
(22) Date of filing: 02.03.2011
(51) Int. Cl.: F21S 2/00, F21V 19/00, G02F 1/1333, G02F 1/13357, H04N 5/66, F21Y 101/02

(54) **LIGHTING DEVICE, DISPLAY DEVICE, AND TELEVISION RECEPTION DEVICE**

(30) Priority: 21.04.2010 JP 2010097982
(71) Applicant: Sharp Kabushiki Kaisha, Osaka-shi, Osaka 545-8522 (JP)
(72) Inventor: KUROMIZU Yasumori, OSAKA 545-8522 (JP)
(74) Representative: Müller-Boré & Partner Patentanwälte
(86) International application number: PCT/JP2011/054705
(87) International publication number: WO 2011/132462

(57) **Abstract**

A backlight unit 12 includes LED boards 18 including LEDs 17, a light guide member 19 having an end portion facing the LEDs 17, a chassis 14 housing the LED boards 18 and the light guide member 19, holding members 23 fixed to the chassis 14 having the LED boards 18 therebetween, and restricting portions 26 restricting the positional relationship of the holding members 23 with respect to the LED boards 18 such that a gap G is provided between the holding members 23 and the LED boards 18. With this configuration, uneven brightness is less likely to occur in the lighting device.

## Description

### TECHNICAL FIELD

The present invention relates to a lighting device, a display device, and a television receiver.

### BACKGROUND ART

In recent years, display elements of an image display device, such as a television receiver, are in a transition from the conventional cathode-ray tube to flat display panel, such as liquid crystal panel or plasma display panel, making it possible to provide a flat image display device. The liquid crystal panel of a liquid crystal display device does not emit light by itself, and therefore the display device requires a backlight unit as a separate lighting device. The backlight unit may be generally categorized by mechanism into a direct type and an edge light type. In order to further reduce the thickness of the liquid crystal display device, it is preferable to use an edge light backlight unit, as described in Patent Document 1 indicated below.
The backlight unit described in this Patent Document 1 is provided with a light guide plate; a LED disposed in an opposed manner with respect to an end of the light guide plate; a LED board on which the LED is mounted; and a lead frame electrically connecting and mechanically fixing the LED to a liquid crystal drive circuit board.

Patent Document 1: Japanese Unexamined Patent Publication No. 11-133394

### Problem to be Solved by the Invention

In the above backlight unit, the LED board is disposed in a chassis, and mechanically fixed by soldering the lead frame to the liquid crystal drive circuit board. This configuration may lead to the following problem. When the thermal environment within the backlight unit is varied, the LED board may be expanded or contracted due to thermal expansion or thermal contraction. When the LED board is rigidly fixed by the lead frame, the expansion or contraction at the fixed portion is restricted, whereby the LED board may be readily deformed by warping or deflection, for example. When such deformation occurs in the LED board, the LED mounted thereon is displaced relative to the end of the light guide plate. As a result, variations are caused in the efficiency with which light from the LED becomes incident on the light guide plate, possibly resulting in uneven brightness in the output light from the backlight unit.

### DISCLOSURE OF THE PRESENT INVENTION

The present invention was made in view of the above circumstances and an object of the present invention is to suppress uneven brightness in a preferred manner.

### Means for Solving the Problem

A lighting device according to the present invention includes a light source board including a light source; a light guide member having an end portion facing the light source; a chassis housing the light source board and the light guide member; a holding member fixed to the chassis with having the light source board therebetween; and a restricting portion restricting positional relationship of the holding member with respect to the light source board to provide a gap between the holding member and the light source board.

With this configuration, when the holding member is fixed to the chassis, the light source board is provided between the holding member and the chassis, and accordingly, the light source faces the end portion of the light guide member. Because the positional relationship of the holding member with respect to the light source board is restricted by the restricting portion that provides the gap between the holding member and the light source board, the light source board is allowed to be easily expanded or contracted by thermal expansion or thermal contraction due to changes in thermal environment. Thus, deformation such as warping or deflection in the light source board is unlikely to occur, resulting in the stable positional relationship between the light source on the light source board and the light guide member. Accordingly, the light incident efficiency from the light source on the light guide member can be stabilized, thereby making uneven brightness less likely to occur in the output light.

Preferably, the embodiments of the present invention may include the following configurations. (1) The restricting portion may be disposed at a position overlapping with the light source board in a plan view, and the light source board may have a through hole through which the restricting portion is inserted. With this configuration, by inserting the restricting portion into the through hole, the light source board can be positioned with respect to the restricting portion.

(2) The holding member may include a main body portion and a fixing portion, and the main body and the chassis has the light source board therebetween, and the fixing portion protrudes from the main body portion toward the chassis and is fixed to the chassis. Both the fixing portion and the restricting portion are inserted through the through hole. With this configuration, both the restricting portion and the fixing portion can be inserted into the through hole, and this simplifies the structure of the light source board and the manufacturing cost for the light source board can be decreased compared to the case if the light source board is provided with separate through holes for the fixing portion and the restricting portion respectively.

(3) The restricting portion may be disposed adjacent to the fixing portion in a plan view. With this configuration, the size of the through hole can be decreased compared to if the restricting portion and the fixing portion are spaced apart from each other on the main body portion.

(4) The through hole may have a peripheral edge and the peripheral edge and a circumferential surface of the restricting portion have a clearance therebetween. With this configuration, the displacement of the light source board relative to the restricting portion can be allowed within the range of the clearance between the through hole and the circumferential surface of the restricting portion. Thus, when the light source board is expanded or contracted by thermal expansion or thermal contraction, deformation such as warping or deflection in the light source board is lee likely to occur. Accordingly, the development of uneven brightness can be prevented in a more preferred manner.

(5) The restricting portion may be integrally provided on a chassis side, the restricting portion protruding toward the holding member and abutted against the holding member. In this way, by abutting the restricting portion integrally provided on the portion chassis side against the holding member, the positional relationship of the holding member with respect to the light source board can be restricted in a good manner.

(6) The restricting portion may be integrally provided to the chassis. In this way, because the restricting portion is integrally provided to the chassis, the number of components and assembly steps can be decreased compared to if the restricting portion is provided as a separate component from the chassis, thus contributing to cost reduction.

(7) The restricting portion may be disposed at a position overlapping with the light source board in a plan view, and the light source board may have a through hole through which the restricting portion is inserted. With this configuration, when the light source board is disposed on the chassis, the restricting portion is inserted into the through hole, whereby the light source board can be positioned with respect to the chassis. In other words, the light source board can be positioned with respect to the chassis prior to attaching the holding member.

(8) The holding member may include a main body portion and a fixing portion, and the main body portion and the chassis may have the light source board therebetween, and the fixing portion may protrudes from the main body portion toward the chassis to be fixed to the chassis. The chassis may have an attaching hole through which the fixing portion is inserted. The restricting portion may be disposed on a peripheral edge portion of the attaching hole. With this configuration, when the fixing portion is inserted into the attaching hole of the chassis, the fixing portion can be guided by the restricting portion disposed on the edge of the attaching hole. Thus, improved workability can be achieved when attaching the holding member.

(9) The restricting portion may be formed in a ring shape extending along the peripheral edge portion of the attaching hole. With this configuration, the strength of the restricting portion can be maintained high, leading to reliable restriction in the positional relationship of the holding member with respect to the light source board.

(10) The restricting portion may be provided separate from the chassis and the holding member, and disposed between the chassis and the holding member. With this configuration, because the restricting portion is provided separate from the chassis and the holding member, the degree of freedom in the material or shape of the restricting portion, for example, can be increased.

(11) The restricting portion may be integrally provided on a holding member side to protrude toward the chassis and abut against the chassis. With this configuration, by abutting the restricting portion integrally provided on the holding member side against the chassis, the positional relationship of the holding member with respect to the light source board can be restricted in a good manner.

(12) The restricting portion may be integrally provided to the holding member. With this configuration, the number of components and assembly steps can be decreased compared to if the restricting portion is provided as a separate component from the holding member, thus contributing to cost reduction.

(13) The holding member may include a main body portion and a fixing portion, the main body portion and the chassis may have the light source board therebetween, and the fixing portion protrudes from the main body portion toward the chassis to be fixed to the chassis. The restricting portion may be provided to the main body portion. With this configuration, when the fixing portion is fixed to the chassis, the light source board sandwiched between the main body portion and the chassis can be held in a preferred manner. At this time, the positional relationship of the holding member with respect to the light source board can be appropriately restricted by the restricting portion provided to the main body portion.

(14) The restricting portion may be formed continuously from the fixing portion. With this configuration, the strength of the restricting portion and the fixing portion can be increased compared to if the restricting portion is independent from the fixing portion.

(15) The restricting portion may surround the fixing portion. With this configuration, the strength of the restricting portion and the fixing portion can be further increased.

(16) The restricting portion may include a plurality of the restricting portions and the restricting portions may be disposed on a circumferential surface of the fixing portion intermittently with respect to a circumferential direction thereof. With this configuration, the material cost for the holding member can be decreased compared to if the restricting portion surrounds the fixing portion.

(17) The restricting portions may be disposed on the circumferential surface of the fixing portion at substantially equal angular intervals. With this configuration, the plurality of restricting portions disposed at substantially equal angular intervals can be stably abutted against the chassis, to more appropriately restrict the positional relationship of the holding member with respect to the light source board.

(18) The holding member may be made of a synthetic resin material. With this configuration, structural design and formation in manufacturing the holding member to which the restricting portion is integrally provided can be facilitated.

(19) The restricting portion may be made of a metal material. With this configuration, a smaller linear coefficient of expansion and higher heat conductivity can be generally obtained compared to the case if the restricting portion is made of a synthetic resin. Thus, expansion or contraction of the restricting portion due to thermal expansion or thermal contraction less likely to occur, resulting in more reliable restriction of the positional relationship between the holding member and the light source board. In addition, the heat generated by the light source on the light source board can be efficiently transmitted via the restricting portion to the chassis. Therefore, excellent heat dissipation property of the light source can be obtained.

(20) The light source board may have an elongated shape having a long side extending along the end portion of the light guide member. The elongated light source board tends to be expanded or contracted by thermal expansion or thermal contraction more in the long side direction, i.e., along the end of the light guide member, than in the short side direction. However, the expansion or contraction of the light source board is allowed due to a gap provided by the restricting portion. Therefore, the deformation of the light source board can be suppressed in a preferred manner and a change in the positional relationship between the light source and the light guide member is less likely to occur.

(21) The lighting device may further include a supporting portion supporting one of elongated ends of the light source board, and the supporting portion and the chassis may support the one elongated end therebetween. With this configuration, the gap is provided between the holding member and the light source board and the supporting portion and the chassis have the light source board therebetween. Accordingly, clattering of the light source board is less likely to occur. On the other hand, the other one of the elongated ends of the light source board is not supported by the supporting portion. Therefore, the expansion or contraction of the light source board due to thermal expansion or thermal contraction can be appropriately allowed, preventing deformation of the light source board, such as warping or deflection.

(22) The supporting portion may be disposed between the light guide member and the light source board. With this configuration, even when thermal expansion is caused in the light guide member, the positional relationship of the light guide member with respect to the light source board and the light source can be restricted by the supporting portion disposed between the light guide member and the light source board. Thus, the light incident efficiency from the light source on the light guide member can be stabilized, preventing uneven brightness of output light.

(23) the light source may include a plurality of the light sources and the light sources may be arranged on the light source board along the long side. With this configuration, a plurality of the light sources can be efficiently disposed on the light source board, which is preferable for obtaining high brightness.

(24) The holding member may be disposed between the adjacent light sources. With this configuration, the space between the adjacent light sources can be effectively utilized. Further, the holding member is less likely to obstruct the light emitted from the light sources.

(25) The holding member may include a main body portion and a fixing portion, and the holding member and the chassis may have the light source board therebetween, and the fixing portion may protrudes from the main body portion toward the chassis to be fixed to the chassis. With this configuration, when the fixing portion is fixed to the chassis, the light source board provided between the main body portion and the chassis can be appropriately held.

(26) The fixing portion may penetrate the chassis and be stopped by a surface of the chassis opposite to a surface on which the light source board is provided. With this configuration, by locking the fixing portion penetrating the chassis on the chassis, the holding member and the light source board can be fixed at low cost and easily without using a separate fixing means, such as an adhesive.

(27) The fixing portion may include an elastically deformable locking part penetrating the chassis and locked on a surface of the chassis opposite to a surface on which the light source board is provided. The holding member may be configured with a first component including the main body portion and the fixing portion, and a second component attached to the first component and restricting elastic deformation of the elastic locking part. When attaching the holding member to the chassis, the second component is mounted on the first component which is previously attached to the chassis, whereby the elastic deformation of the elastic locking part penetrating the chassis and locked on the other side from the light source board is restricted. Thus, the holding member is retained in an anti-falling state. When detaching the holding member from the chassis, the second component is detached from the first component to allow the elastic return of the elastic locking part into original shape, and then the first component is detached. By thus attaching or detaching the second component to or from the first component, the holding member can be easily attached to or detached from the chassis without using a special tool. Therefore, excellent workability can be obtained. Particularly, excellent working efficiency can be obtained during a disassembly operation for maintenance or discard of the lighting device.

(28) The light source and the end portion of the light guide member facing the light source may be spaced apart from each other with a space therebetween, and the lighting device may further include a pair of reflection members having the space therebetween. With this configuration, the light emitted from the light source is repeatedly reflected by the pair of reflection members within the space between the light source and the opposed end of the light guide member thereto. Therefore, the light can become incident on the end of the light guide member efficiently. Thus, the light use efficiency can be increased.

(29) The light source may be a LED. With this configuration, high brightness and low power consumption, for example, can be achieved.

Next, to solve the above problem, a display device of the present invention includes the lighting device described above and a display panel providing a display by utilizing the light from the lighting device.

The display device can provide a display with excellent display quality because uneven brightness is less likely to occur in the output light produced by the lighting device supplying light to the display panel.

The display panel may be a liquid crystal panel including a pair of substrates with liquid crystal sealed between. The display device as a liquid crystal display device may be applied to various purposes, including displays for televisions and personal computers, and is particularly suitable for large screens.

### Advantageous Effect of the Invention

According to the present invention, uneven brightness is less likely to occur.

### BRIEF DESCRIPTION OF THE DRAWINGS

FIG. 1 is a an exploded perspective view illustrating a schematic configuration of a television receiver according to a first embodiment of the present invention;
FIG. 2 is an exploded perspective view illustrating a schematic configuration of a liquid crystal display device included in the television receiver;
FIG. 3 is a cross sectional view illustrating a cross sectional configuration of the liquid crystal display device along a short side direction;
FIG. 4 is a cross sectional view illustrating a cross sectional configuration of the liquid crystal display device along a long side direction;
FIG. 5 is a plan view illustrating an arrangement configuration of a chassis, a light guide member, LED boards, and holding members in a backlight unit included in the liquid crystal display device;
FIG. 6 is a plane cross sectional view of the backlight unit illustrating the LED board attached to the chassis with the holding members;
FIG. 7 is an enlarged view of a main portion of FIG. 6;
FIG. 8 is a plane cross sectional view of a backlight unit according to a first modification of the first embodiment;
FIG. 9 is a plane cross sectional view of a backlight unit according to a second modification of the first embodiment;
FIG. 10 is a plane cross sectional view of a backlight unit according to a third modification of the first embodiment;
FIG. 11 is a cross sectional view illustrating the LED board attached to the chassis with a holding member according to a second embodiment of the present invention;
FIG. 12 is a bottom view of the holding member;
FIG. 13 is a cross sectional view illustrating the LED board attached to the chassis with a holding member according to a first modification of the second embodiment;
FIG. 14 is a bottom view of the holding member;
FIG. 15 is a cross sectional view illustrating the LED board attached to the chassis with a holding member according to a second modification of the second embodiment;
FIG. 16 is a cross sectional view illustrating a holding member according to a third modification of the second embodiment in a state prior to attaching to the chassis;
FIG. 17 is a cross sectional view illustrating a first component of the holding member in an attached state to the chassis;
FIG. 18 is a cross sectional view illustrating a second component in a mounted state on the first component;
FIG. 19 is a cross sectional view illustrating a holding member and a restricting portion according to a third embodiment of the present invention in a state prior to attaching to the chassis; and
FIG. 20 is a cross sectional view illustrating an LED board in an attached state to the chassis with the holding member according to the third embodiment.

### BEST MODE FOR CARRYING OUT THE INVENTION

### <First embodiment>

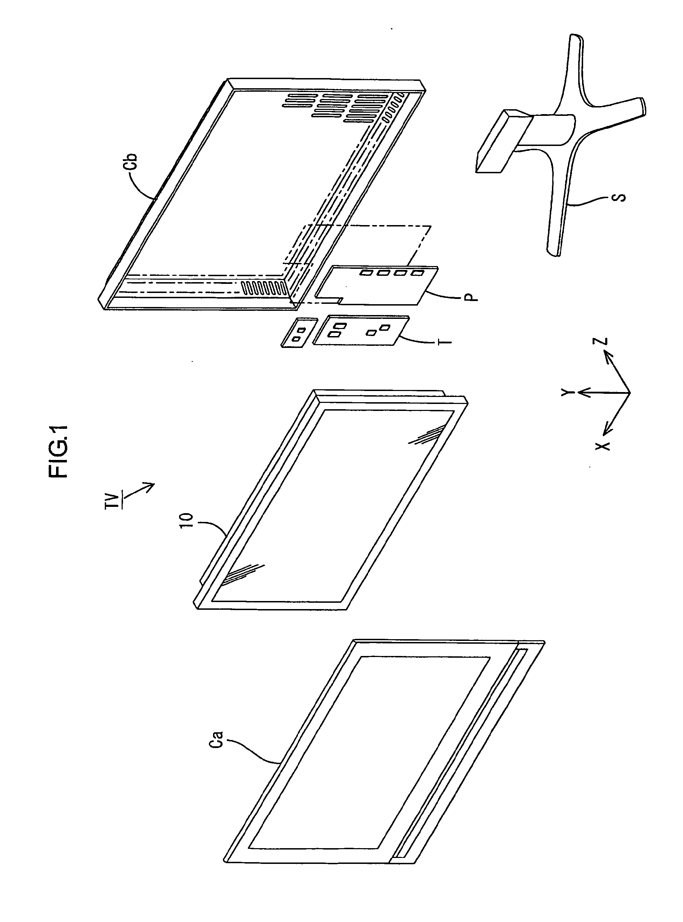

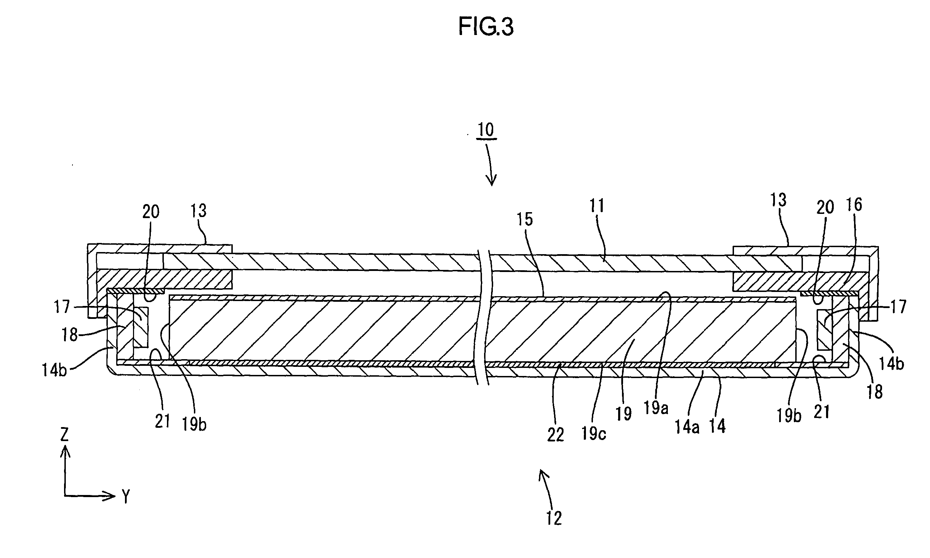

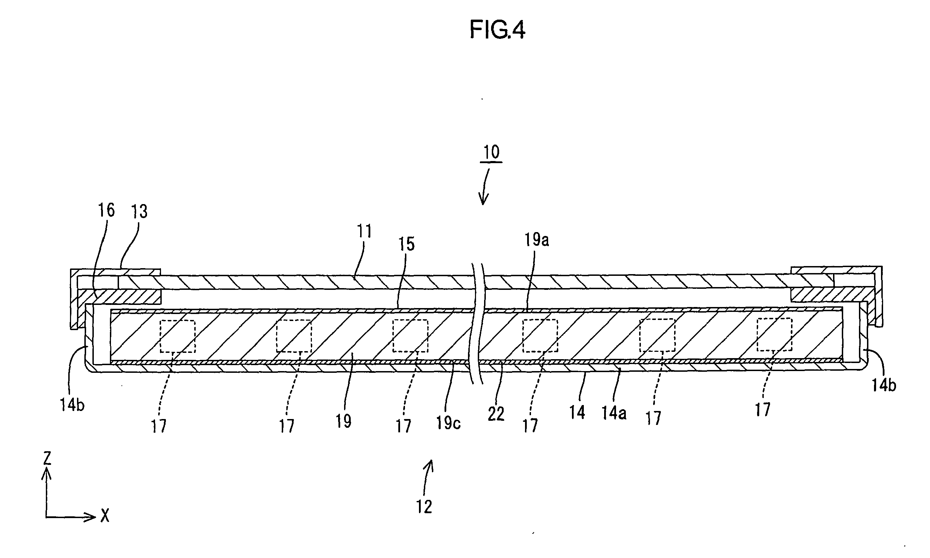

A first embodiment of the present invention will be described with reference to FIGS. 1 to 7. According to the present embodiment, a liquid crystal display device 10 will be described by way of example. In some parts of the drawings, an X-axis, a Y-axis, and a Z-axis are shown as the respective axial directions corresponding to the directions shown in the respective drawings. The upper side and the lower side shown in FIGS. 3 and 4 correspond to the front side and the rear side, respectively.

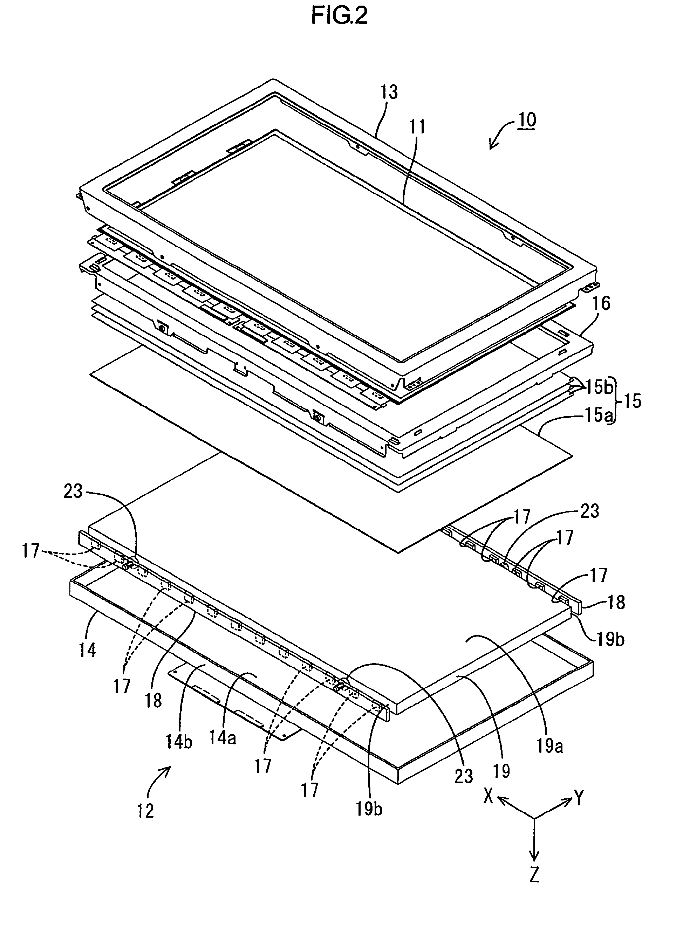

As illustrated in FIG. 1, the television receiver TV according to the present embodiment includes the liquid crystal display device 10, front and back cabinets Ca and Cb between which the liquid crystal display device 10 is housed, a power source P, a tuner T, and a stand S. The liquid crystal display device (display device) 10 has a generally horizontally long (elongated) square (rectangular) shape, and is housed in a vertically disposed manner with their short side direction aligned with the vertical direction. The liquid crystal display device 10, as shown in FIG. 2, includes a liquid crystal panel 11 as a display panel and a backlight unit (lighting device) 12 as an external light source, which are integrally held by a frame-shaped bezel 13 or the like.

The liquid crystal panel 11, as shown in FIG. 2, has a horizontally long (elongated) square (rectangular) shape in plan view, including a pair of glass substrates affixed to each other via a predetermined gap, with liquid crystal sealed between the glass substrates. One of the glass substrates has switching components (for example, TFTs) connected to a source wiring and a gate wiring orthogonal to each other, pixel electrodes connected to the switching components, an alignment film, or the like. The other glass substrate has a color filter including color sections of, for example, R (red), G (green), and B (blue) in predetermined arrangements, counter electrodes, an alignment film, or the like. On the outer sides of the glass substrates, polarizing plates are disposed.

The backlight unit 12, as shown in FIG. 2, is provided with a chassis 14 of a substantially box-like shape with an opening on a light output surface side (on the side of the liquid crystal panel 11), and a group of optical members 15 (a diffuser plate (a light diffuser member) 15a and a plurality of optical sheets 15b disposed between the diffuser plate 15a and the liquid crystal panel 11) covering the opening of the chassis 14. In the chassis 14, there are further provided LEDs 17 (Light Emitting Diode) as light sources; LED boards 18 on which the LEDs 17 are mounted; a light guide member 19 guiding the light from the LEDs 17 to the optical members 15 (the liquid crystal panel 11) ; a frame 16 retaining the light guide member 19 from the front side; and holding members 23 holding the LED boards 18 in an attached state with respect to the chassis 14. The backlight unit 12 includes the LED boards 18 with the LEDs 17 along the long side ends of the backlight unit 12, with the light guide member 19 disposed at the center between the LED boards 18 on the sides. Thus, the backlight unit 12 is of the so-called edge light type (side light type). In the following, the constituent parts of the backlight unit 12 will be described in detail.

The chassis 14 is made of a metal plate, such as an aluminum plate or an electrogalvanized steel plate (SECC). As shown in FIGS. 2 and 3, the chassis 14 comprises a bottom plate 14a of a horizontally long square shape similar to the liquid crystal panel 11, and a pair of side plates 14b rising from the long side outer ends of the bottom plate 14a. The chassis 14 (bottom plate 14a) has a long side direction aligned with the X-axis direction (horizontal direction) and a short side direction aligned with the Y-axis direction (vertical direction). To the side plates 14b, the frame 16 and the bezel 13 can be secured by screws.

The optical members 15, as shown in FIG. 2, has a horizontally long square shape in plan view, similar to the liquid crystal panel 11 and the chassis 14. The optical members 15 are mounted on the front side (light output side) of the light guide member 19 to be interposed between the liquid crystal panel 11 and the light guide member 19. The optical members 15 include the diffuser plate 15a disposed on the rear side (facing the light guide member 19; opposite to the light output side), and the optical sheets 15b disposed on the front side (facing the liquid crystal panel 11; the light output side). The diffuser plate 15a includes a substantially transparent plate-like base substrate of a resin with a predetermined thickness, in which a number of diffusing particles are dispersed. The diffuser plate 15a has the function of diffusing transmitted light. The optical sheets 15b are formed of three sheets stacked, each with a thickness smaller than the one of the diffuser plate 15a. Specific types of the optical sheets 15b may include a diffuser sheet, a lens sheet, and a reflection type polarizing sheet, from which one or more may be appropriately selected and used.

The frame 16, as shown in FIG. 2, has a frame shape extending along the outer peripheral ends of the light guide member 19 to retain substantially the entire outer peripheral ends of the light guide member 19 from the front side. The frame 16 is made of a synthetic resin and has a black surface, for example, thus providing light blocking property. To the rear side surfaces of the frame 16 on the long side portions thereof, i.e., on the surfaces facing the light guide member 19 and the LED boards 18 (LED 17), as shown in FIG. 3, first reflection sheets 20 reflecting light are attached. The first reflection sheets 20 are dimensioned to extend over substantially the entire length of the long side portions of the frame 16. Thus, the first reflection sheets 20 are in contact with the ends of the light guide member 19 on the side of the LED boards 18, and cover both the ends of the light guide member 19 and the LEDs 17 from the front side. The frame 16 is also configured to receive the outer peripheral ends of the liquid crystal panel 11 from the rear side.

The LED 17 may include LED chips sealed on a board portion fixed on the LED board 18 using a resin material, as illustrated in FIGS. 2 and 3. The LED chips mounted on the board portion have a single type of dominant light emission wavelength. Specifically, the LED chips emit a single color light of blue. The resin material sealing the LED chips contains a dispersion of a phosphor that emits a predetermined color upon excitation by the blue light emitted by the LED chips such that substantially white light can be emitted as a whole. As the phosphor, a yellow phosphor that emits yellow light, a green phosphor that emits green light, and a red phosphor that emits red light may be used either individually or in an appropriate combination. The LED 17 has a light emitting surface on the side opposite to the side mounted on the LED board 18, that is, are of the so-called "top type".

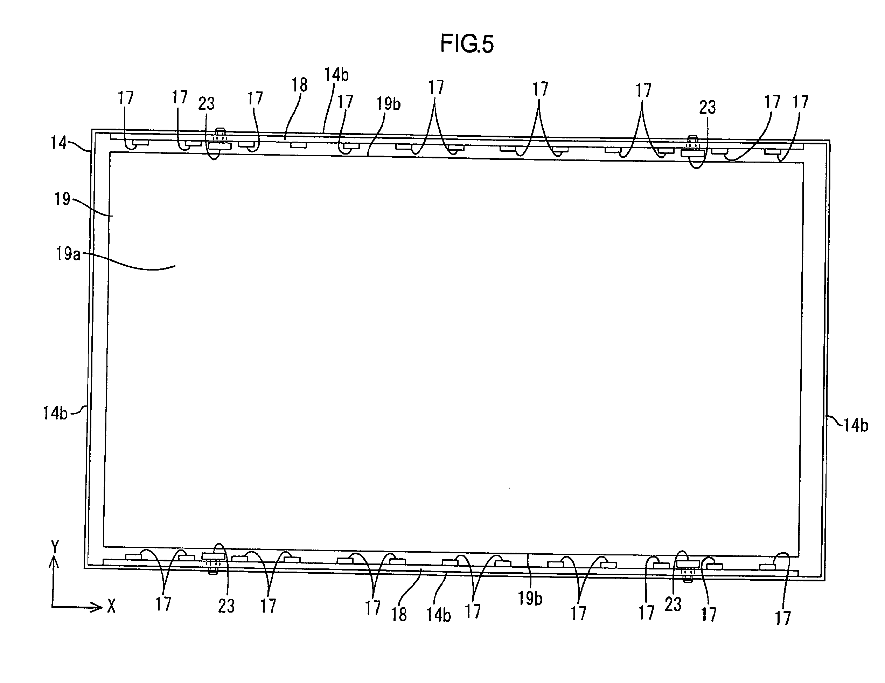

The LED boards 18 are made of a synthetic resin (such as a glass epoxy resin) with a white surface for excellent light reflectivity. As shown in FIGS. 2 and 5, the LED boards 18 have an elongated plate shape extending along the long side direction of the chassis 14 (i.e., along the ends of the light guide member 19 facing the LEDs 17; the X-axis direction). The LED boards 18 are housed in the chassis 14 with main plate surfaces of the plate shape parallel with the X-axis direction and the Z-axis direction; namely, orthogonal to the plate surfaces of the liquid crystal panel 11 and the light guide member 19 (the optical members 15). Thus, the LED boards 18 are positioned with the long side direction and the short side direction of the main plate surfaces aligned with the X-axis direction and the Z-axis direction, respectively, and with a plate thickness direction orthogonal to the main plate surfaces aligned with the Y-axis direction. The LED boards 18 are held in the attached state on the inner surfaces of the pair of side plates 14b on the long side outer ends of the chassis 14 by the holding members 23. The structure for attaching the LED boards 18 will be described in detail later with reference to the holding members 23.

The LED boards 18, as shown in FIGS. 2, 3, and 5, are disposed in a pair at positions sandwiching the light guide member 19 with respect to the Y-axis direction. Specifically, each one of the LED boards 18 is disposed between the light guide member 19 and each of the side plates 14b of the chassis 14, and housed in the chassis 14 from the front side along the Z-axis direction. On the inner one of the main plate surfaces of each of the LED boards 18 facing the light guide member 19 (i.e., the surface opposed to the light guide member 19), a plurality of the LEDs 17 (thirteen LEDs 17 in FIG. 2) is disposed side by side in a line intermittently along the long side direction of the LED boards 18 (the ends of the light guide member 19 facing the LEDs 17; the X-axis direction). Thus, the plurality of the LEDs 17 is surface-mounted on the surfaces of the LED boards 18 facing the light guide member 19. On the mount surfaces of the LED boards 18, a wiring pattern (not shown) made of a metal film (such as a copper foil) extends along the X-axis direction and across the adjacent LEDs 17 to connect the adjacent LEDs 17 in series. At the ends of the wiring pattern, terminal portions are formed. The terminal portions are connected to an external drive circuit, supplying drive power to the LEDs 17. The LED boards 18 are of a single-surface mount type in which only one of the main plate surfaces provides the mount surface. The intervals between the LEDs 17 adjacent to each other with respect to the X-axis direction, i.e., the arrangement pitch of the LEDs 17, are substantially regular. The pair of LED boards 18 is housed in the chassis 14 with the mount surfaces for the LEDs 17 opposed to each other. Thus, the LEDs 17 mounted on the LED boards 18 have their light emitting surfaces opposed to each other, with the optical axes of the LEDs 17 substantially aligned with the Y-axis direction. In other words, the LEDs 17 mounted on the pair of the LED boards 18 are disposed in an opposed manner with respect to the ends of the light guide member 19 in the Y-axis direction (i.e., with respect to the long side ends of the light guide member 19). The LED boards 18 may be made of the same metal material as the chassis 14, such as an aluminum-based material, with the wiring pattern formed on the surface via an insulating layer.

The light guide member 19 is made of a substantially transparent (capable of high light transmission) synthetic resin material (such as acrylic) with a refractive index higher than air. The light guide member 19, as shown in FIG. 2, is disposed immediately under the liquid crystal panel 11 and the optical members 15 in the chassis 14. The light guide member 19 is positioned with a long side direction and a short side direction of the main plate surfaces aligned with the X-axis direction and the Y-axis direction, respectively, and with a plate thickness direction orthogonal to the main plate surfaces aligned with the Z-axis direction. The pair of the LED boards 18 is disposed at the ends of the chassis 14 on the long sides to sandwich the light guide member 19 between with respect to the Y-axis direction. Thus, the arrangement direction of the LEDs 17 (the LED boards 18) and the light guide member 19 is aligned with the Y-axis direction, while the arrangement direction of the optical members 15 (liquid crystal panel 11) and the light guide member 19 is aligned with the Z-axis direction, the both arrangement directions orthogonal to each other. The light guide member 19 has the function of introducing the light emitted from the LED 17 in the Y-axis direction and outputting the light up toward the optical members 15 (in the Z-axis direction) while allowing the light to travel therein. The light guide member 19 is disposed at the center of the bottom plate 14a of the chassis 14 in the short side direction thereof; namely, the light guide member 19 is supported from the rear side by the central portion of the bottom plate 14a in the short side direction. The light guide member 19 is slightly larger than the optical members 15. Therefore, the outer peripheral ends of the light guide member 19 extend outward beyond the outer peripheral end surfaces of the optical members 15, which are retained by the frame 16 (FIG. 3).

The light guide member 19 has a substantially flat plate-like shape extending along the respective plate surfaces of the bottom plate 14a of the chassis 14 and the optical members 15, with main plate surfaces parallel with the X-axis direction and the Y-axis direction. Of the main plate surfaces of the light guide member 19, the one facing the front side constitutes a light output surface 19a outputting the internal light toward the optical members 15 and the liquid crystal panel 11. Of the outer peripheral end surfaces of the light guide member 19 adjacent to the main plate surfaces, the elongated end surfaces on the long sides along the X-axis direction are opposed to the LED 17 (the LED boards 18) via a predetermined interval, constituting light incident surfaces 19b on which the light emitted from the LED 17 become incident. On the front side of the space between the LEDs 17 and the light incident surfaces 19b, the first reflection sheet 20 is disposed, as shown in FIG. 3. Further, on the rear side of the space, second reflection sheets 21 are disposed in such a manner as to sandwich the space with the first reflection sheet 20. The reflection sheets 20 and 21 also sandwich the ends of the light guide member 19 facing the LEDs 17 and the LEDs 17 as well as the space. Thus, the light from the LEDs 17 can be repeatedly reflected between the reflection sheets 20 and 21 and thereby made to become incident on the light incident surfaces 19b efficiently. Moreover, the light incident surfaces 19b are parallel with the X-axis direction and the Z-axis direction and are substantially orthogonal to the light output surface 19a. The arrangement direction of the LEDs 17 and the light incident surfaces 19b is aligned with the Y-axis direction and is parallel with the light output surface 19a.

A light guide reflection sheet 22, configured to reflect the light within the light guide member 19 up toward the front side, covers substantially the entire area of a surface 19c of the light guide member 19 on the opposite side to the light output surface 19a. In other words, the light guide reflection sheet 22 is sandwiched between the bottom plate 14a of the chassis 14 and the light guide member 19. On at least one of the light output surface 19a of the light guide member 19 and the opposite surface 19c thereto, a reflecting portion (not shown) reflecting the internal light or a scattering portion (not shown) scattering the internal light is patterned with a predetermined in-plane distribution. Thereby, the output light from the light output surface 19a is controlled to have a uniform distribution within its surface.

Next, the holding members 23 will be described in detail. The holding members 23, which may be made of a metal such as aluminum or iron, are so-called screw members. As shown in FIG. 5, the holding member 23 includes a main body portion 24 extending along the main plate surfaces of the LED boards 18 (the X-axis direction and the Z-axis direction), and a fixing portion 25 protruding outward from the main body portion 24 along the direction orthogonal to the main plate surfaces of the LED boards 18 (the Y-axis direction), i.e., toward the long-side side plates 14b of the chassis 14, to be fixed to the long-side side plates 14b. The fixing portion 25 is formed on the surface of the main body portion 25 facing outside. On the inside surface of the main body portion 24 (i.e., the surface facing the light guide member 19), an engagement groove (not shown) for a fastening tool, such as a driver, is formed. The circumferential surface of the fixing portion 25 is formed with threads.

The LED boards 18 have through holes 18a into which the fixing portions 25 of the holding members 23 can be inserted. The long-side side plates 14b of the chassis 14 have attaching holes 14c in which the fixing portions 25 can be threadedly fixed. By screwing the fixing portion 25 of the holding member 23 onto the respective attaching holes 14c of the long-side side plates 14b of the chassis 14 via the through hole 18a of the LED board 18, the LED board 18 can be held between the main body portion 24 and each of the long-side side plates 14b of the chassis 14. The attaching holes 14c have roughly the same diameter as the outer diameter of the fixing portions 25. The holding members 23 are provided at two positions on each of the LED boards 18 that are spaced apart from each other along the long side direction (the X-axis direction). Two through holes 18a are formed in each of the LED boards 18 at positions where the holding members 23 are attached, i.e., at respective positions overlapping with the each fixing portion 25 of the holding members 23. The through holes 18a and the holding members 23 are disposed between the adjacent LEDs 17 on the LED boards 18; specifically, between the second and the third LEDs 17 from the respective ends of the LED boards 18 in the long side direction. Two attaching holes 14c are formed in each of the long-side side plates 14b at positions aligned with the two through holes 18a in the LED boards 18.

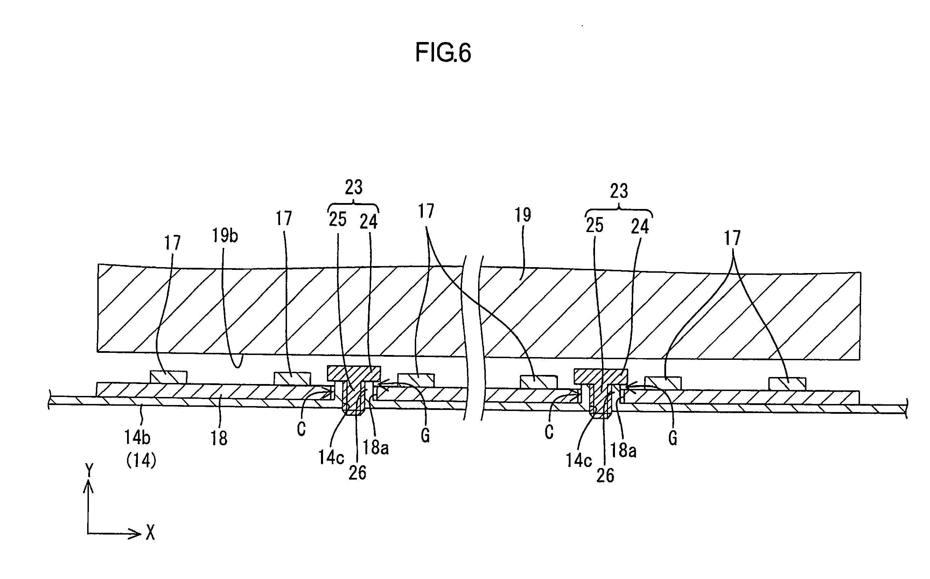

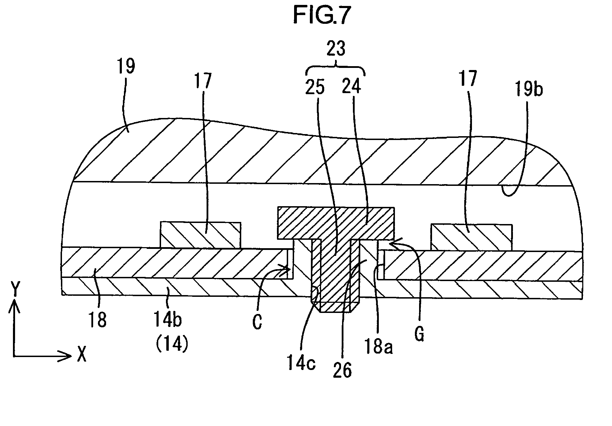

As shown in FIGS. 6 and 7, the chassis 14 according to the present embodiment is provided with restricting portions 26 that restrict the positional relationship of the holding members 23 with respect to the LED boards 18. The restricting portions 26 are sandwiched between the chassis 14 and the holding members 23 with respect to the Y-axis direction (the direction orthogonal to the main plate surfaces of the LED boards 18). The restricting portions 26 are integrally provided to the long-side side plates 14b of the chassis 14, and protrude from the long-side side plates 14b toward the inside (toward the holding members 23). The main body portion 24 has a greater outer diameter than the outer diameter of the restricting portion 26 such that an outer circumferential end portion of the main body portion 24 extends beyond the restricting portion 26 in the radial direction, forming a flange. The restricting portion 26 includes protruding end surface directly abutted against the surface of the main body portion 24 of the holding member 23 facing outside (where the fixing portion 25 is formed). Namely, the protruding end surface of the restricting portion 26 is abutted directly against the surface of the main body portion 24 opposed to the LED boards 18. Thus, the surface of the outer circumferential end portion of the main body portion 24 that is opposed to the LED boards 18 is maintained in a non-contact state with respect to the LED boards 18 and to be apart from the LED boards 18, with a gap G between the surface and the LED boards 18. The protrusion of the restricting portions 26 from the long-side side plates 14b is greater than the thickness of the LED boards 18, the dimensional difference corresponding to the gap G. Accordingly, the holding members 23 are configured not to directly press the LED boards 18 from the inside. Therefore, the LED boards 18 are subjected to hardly any pressing force (stress).

Specifically, the restricting portion 26 is integrally formed with the long-side side plates 14b by raising the edge of the attaching hole 14c of the respective long-side side plates 14b into a bossed shape by burring, for example. In other words, the restricting portion 26 is formed by a part of the long-side side plates 14b protruding inward, with the proximal end side of the protrusion continuous with the edges of the attaching holes 14c of the long-side side plates 14b. Thus, the restricting portion 26 is disposed at a position overlapping with the edge of the attaching hole 14c in plan view and adjacent to the fixing portion 25 inserted into the attaching hole 14c in plan view. The restricting portion 26 surrounds the entire circumference of the attaching hole 14c (the fixing portion 25), forming an endless ring along the edge of the attaching hole 14c in plan view. The restricting portion 26 has a substantially short-cylindrical shape rising from the edge of the attaching hole 14c toward the inside, and substantially the same internal diameter as the internal diameter of the attaching hole 14c. Thus, the inner circumferential surface of the restricting portion 26 and the inner circumferential surface of the attaching hole 14c form a single flush surface with no steps. Into the restricting portion 26, the fixing portion 25 can be inserted. The opening of the restricting portion 26 at the protruding end thereof constitutes an entry of the attaching hole 14c for the fixing portion 25. Thus, the restricting portion 26 also functions as a guiding structure for the fixing portion 25 to be inserted into the attaching hole 14c.

The restricting portion 26 has substantially the same internal diameter as the diameter of the attaching hole 14c. On the other hand, the through hole 18a formed in the LED board 18 has a greater diameter than the outer diameter of the restricting portion 26, thus allowing insertion of the restricting portion 26. Specifically, the through hole 18a has a substantially circular shape that extends along the outer shape of the restricting portion 26 in plan view, with a diameter larger than the outer diameter of the restricting portion 26, such that a predetermined clearance C is provided between the inner circumferential surface of the through hole 18a and the outer circumferential surface of the restricting portion 26. Thus, the LED board 18 is allowed to be displaced relative to the restricting portion 26 and the respective long-side side plates 14b with respect to the direction along the main plate surfaces (the X-axis direction and the Z-axis direction) within the range of the clearance C. Accordingly, the fixing portion 25 as well as the restricting portion 26 can be inserted into the through hole 18a. When the restricting portion 26 is inserted into the through hole 18a, the outer circumferential surface of the restricting portion 26 can be abutted against the inner circumferential surface (edge) of the through hole 18a. Therefore, the LED board 18 can be positioned two-dimensionally relative to the chassis 14 with respect to the X-axis direction and the Y-axis direction.

As described above, the chassis 14 integral with the restricting portions 26 is made of a metal plate, such as an aluminum plate or an electrogalvanized steel plate (SECC). Thus, compared to if the chassis 14 is made of a synthetic resin, a smaller linear coefficient of expansion (rate of thermal expansion) and higher heat conductivity can be obtained. Accordingly, the amount of thermal expansion or contraction of the restricting portions 26 due to changes in thermal environment is decreased. In addition, the heat generated by the lighting of the LEDs 17 can be efficiently transmitted from the LED boards 18 to the chassis 14. Thus, the restricting portions 26 can be maintained in a stably abutted state with respect to the holding members 23, and excellent heat dissipating performance of the LEDs 17 can be obtained.

An operation of the present embodiment with the above structure will be described below. When the liquid crystal display device 10 is manufactured, the liquid crystal panel 11, the backlight unit 12, the bezel 13, and the like are separately manufactured, and then assembled. In the following, a procedure for assembling the liquid crystal display device 10 will be described.

Prior to assembly of the liquid crystal display device 10, when forming the chassis 14 from sheet metal, the edges of the attaching holes 14c in the long-side side plates 14b are formed into restricting portions 26 of a bossed shape to be inwardly risen by burring. When assembling the liquid crystal display device 10, first, the LED boards 18 with the LEDs 17 surface-mounted are attached to the chassis 14 with the restricting portions 26 previously formed. Specifically, the LED boards 18 are housed in the chassis 14 with the mount surfaces for the LEDs 17 facing inward, to fit on the inner surfaces of the long-side side plates 14b. At this time, the through holes 18a of the LED boards 18 are aligned with the restricting portions 26 rising from the edges of the attaching holes 14c of the long-side side plates 14b, such that the restricting portions 26 are inserted into the through holes 18a. In this way, the LED boards 18 are two-dimensionally positioned relative to the chassis 14 with respect to the X-axis direction and the Z-axis direction. Because the LED boards 18 are positioned relative to the chassis 14 prior to assembling the holding members 23, the holding members 23 can be smoothly assembled.

Next, the holding members 23 are fixed in the attaching holes 14c of the chassis 14. Specifically, the fixing portion 25 of the holding members 23 is inserted into the attaching holes 14c of the long-side side plates 14b while the fixing portion 25 is positioned with respect to the attaching holes 14c. At this time, because the restricting portions 26 are formed to be risen from the edges of the attaching holes 14c and to have the protruding end further inside than the LED boards 18, the worker can perform the operation smoothly using the restricting portions 26 as a guiding mark. When the fixing portion 25 is inserted into the opening at the protruding end of the restricting portion 26, the fixing portion 25 reaches the attaching hole 14c through the restricting portion 26. Thus, the insertion of the fixing portion 25 into the attaching hole 14c can be guided by the restricting portion 26. When the fixing portion 25 has reached the attaching hole 14c, the holding member 25 is rotated in a fastening direction by using a fastening tool, such as a driver, whereby the threads of the fixing portion 25 can be screwed into the edge of the attaching hole 14c. Thus, the holding members 23 are prevented from falling off the chassis 14 and are securely fixed in the attached state.

As shown in FIG. 7, when the holding members 25 are inserted into the attaching holes 14c to a predetermined depth, the protruding end surfaces of the restricting portions 26 are abutted against the surface of the main body portion 24 facing outward, i.e., the surface opposed to the LED boards 18, such that any further insertion is restricted. Because the restricting portions 26 protrude toward the front side beyond the LED boards 18, the surface of the main body portion 24 opposed to the LED boards 18 is maintained in a non-contact state from the LED boards 18 so as to be closer to the front side and apart from the LED boards 18. Between the facing surfaces of the outer circumferential end portion of the main body portion 24 and the edges of the through holes 18a of the LED boards 18, the gap G corresponding to the protruding amount of the restricting portions 26 beyond the LED boards 18 is provided. Thus, the stress produced by fastening the holding members 23 can be prevented from directly acting on the LED boards 18.

After all of the holding members 25 are attached, the second reflection sheets 21, and the light guide member 19 with the light guide reflection sheet 22 integrally attached in advance are assembled within the chassis 14. Thereafter, the optical members 15 are layered on the light output surface 19a of the light guide member 19. The optical members 15 are layered on the light output surface 19a of the light guide member 19 in the order of the diffuser plate 15a and the optical sheet 15b (a diffuser sheet, a lens sheet, and a reflection type polarizing sheet). This is followed by attaching the frame 16 to the chassis 14, and then assembling the liquid crystal panel 11 and the bezel 13 in order, thereby obtaining the liquid crystal display device 10 shown in FIGS. 3 and 4.

When a power source to the liquid crystal display device 10 manufactured as described above is turned on, the driving of the liquid crystal panel 11 is controlled by a control circuit which is not shown, while the driving of the LEDs 17 on the LED boards 18 is controlled by drive power supplied from a power supply substrate, not shown. The light from the LEDs 17 is guided by the light guide member 19 and irradiated onto the liquid crystal panel 11 via the optical members 15 to display a predetermined image on the liquid crystal panel 11. In the following, an operation of the backlight unit 12 will be described in detail. As the LEDs 17 are turned on, the light emitted from the LEDs 17 becomes incident on the light incident surfaces 19b of the light guide member 19, as shown in FIG. 3. Although the predetermined space is provided between the LEDs 17 and the light incident surfaces 19b, the space is optically enclosed by the first reflection sheet 20 on the front side and the second reflection sheets 21 on the rear side. Thus, the light from the LEDs 17 is repeatedly reflected by the reflection sheets 20 and 21 such that the light can become incident on the light incident surfaces 19b efficiently with hardly any of the light leaking outside. The light incident on the light incident surfaces 19b travels through the light guide member 19 as being reflected by the light guide reflection sheet 22, for example. Then, the light is output via the light output surface 19a. Thereafter, the light passes through the optical members 15 and reaches the liquid crystal panel 11.

During the use of the liquid crystal display device 10, the internal temperature environment of the backlight unit 12 may be varied by the turning on and off of the LEDs 17, possibly resulting in thermal expansion or thermal contraction of the constituent components of the liquid crystal display device 10. When the LED boards 18, among the constituent components, are expanded or contracted by thermal expansion or thermal contraction, the LEDs 17 mounted on the LED boards 18 are displaced in the Y-axis direction due to warping or deflection in the LED boards 18, possibly providing change in the interval between the LEDs 17 and the light incident surfaces 19b of the light guide member 19. As a result, the light incident efficiency from the LEDs 17 on the light incident surfaces 19b may be varied, thereby producing uneven brightness. The amount of expansion or contraction of the LED boards 18 due to thermal expansion or thermal contraction is particularly large with respect to the X-axis direction, i.e. , the long side direction.

In this respect, according to the present embodiment, as shown in FIG. 7, the restricting portions 26 provided to the chassis 14 are abutted against the main body portion 24 of the holding members 23, to maintain the main body portion 24 and the opposite LED boards 18 in a mutually non-contact state via the predetermined gap G. Thus, no pressing force is allowed to act on the LED boards 18 from the holding members 23 with respect to the Y-axis direction (the orthogonal direction to the main plate surfaces of the LED boards 18). In addition, there is the predetermined clearance C ensured between the through holes 18a of the LED boards 18 and the circumferential surfaces of the restricting portions 26, allowing the LED boards 18 to be displaced relative to the restricting portions 26 and the long-side side plates 14b within the range of the clearance C, with respect to the X-axis direction (the long side direction of the LED boards 18) and the Z-axis direction (the short side direction of the LED boards 18). Accordingly, the LED boards 18 are allowed to be expanded or contracted by thermal expansion or thermal contraction with hardly any interference; i.e., the LED boards 18 have an extremely high degree of expansive or contractive freedom. Thus, the LED boards 18 can be generally freely expanded or contracted by thermal expansion or thermal contraction depending on changes in the thermal environment, not easily causing deformation such as warping or deflection. As a result, a constant positional relationship can be maintained between the LEDs 17 mounted on the LED boards 18 and the light incident surfaces 19b of the light guide member 19 with respect to the Y-axis direction, providing the stable incident efficiency of the light from the LEDs 17 on the light incident surfaces 19b. Therefore, the development of uneven brightness in the output light from the light guide member 19 is unlikely to occur. In addition, because the restricting portions 26 are integrally formed with the metal chassis 14, compared to if the restricting portions 26 are made of a synthetic resin, for example, the amount of contraction or expansion due to thermal expansion or thermal contraction caused by changes in the thermal environment can be reduced, and the heat generated by the lighting of the LEDs 17 can be efficiently transmitted from the LED boards 18 to the chassis 14. Accordingly, the abutted state of the restricting portions 26 with respect to the holding members 23 can be stably maintained and excellent performance of heat dissipation from the LEDs 17 can be obtained.

As described above, the backlight unit 12 according to the present embodiment includes the LED boards 18 having the LEDs 17, the light guide member 19 having the end portions racing the LEDs 17, the chassis 14 housing the LED boards 18 and the light guide member 19, the holding members 23 fixed to the chassis 14 having the LED boards 18 therebetween, and the restricting portions 26 restricting the positional relationship of the holding members 23 with respect to the LED boards 18 to provide the gap G therebetween.

In this way, the LED boards 18 can be held in the sandwiched state between the holding members 23 and the chassis 14 when the holding members 23 are fixed to the chassis 14. Therefore, the LEDs 17 can be maintained in the state of being opposed to the ends of the light guide member 19. The positional relationship of the holding members 23 with respect to the LED boards 18 is restricted by the restricting portions 26 to provide the gap G therebetween. Therefore, the LED boards 18 can be easily expanded or contracted by thermal expansion or thermal contraction due to changes in the thermal environment. Thus, deformation of the LED boards 18, such as warping or deflection, is unlikely to occur. As a result, change in the positional relationship between the LEDs 17 on the LED boards 18 and the light guide member 19 is less likely to occur. Accordingly, the light incident efficiency from the LEDs 17 on the light guide member 19 can be stabilized, and thereby the development of uneven brightness in output light does not easily occur.

The restricting portions 26 are disposed at positions overlapping with the LED boards 18 in plan view, and the LED boards 18 have the through holes 18a allowing insertion of the restricting portions 26. In this way, the LED boards 18 can be positioned relative to the restricting portions 26 by inserting the restricting portions 26 into the through holes 18a.

The holding member 23 is provided with the main body portion 24 sandwiching the LED board 18 with the chassis 14, and the fixing portion 25 protruding from the main body portion 24 toward the chassis 14 to be fixed to the chassis 14. The through holes 18a have a size allowing insertion of both the fixing portion 25 and the restricting portion 26 together. In this way, because both the restricting portion 26 and the fixing portion 25 can be inserted into the through holes 18a, the structure of the LED boards 18 can be simplified and the manufacturing cost for the LED boards 18 can be reduced compared to if separate through holes are formed in the LED boards for the fixing portion 25 and the restricting portion 26 individually.

The restricting portions 26 are disposed adjacent to the fixing portion 25 in plan view. In this way, the size of the through holes 18a can be decreased compared to if the restricting portions and the fixing portion are disposed apart from each other on the main body portion 24.

The through holes 18a have the clearance C from the circumferential surface of the restricting portions 26. In this way, the displacement of the LED boards 18 relative to the restricting portions 26 is allowed within the range of the clearance C provided between the through holes 18a and the circumferential surface of the restricting portions 26. Thus, deformation of the LED boards 18, such as warping or deflection, upon expansion or contraction due to thermal expansion or thermal contraction does not easily occur. Accordingly, the development of uneven brightness can be prevented in a more preferred manner.

The restricting portions 26 are integrally provided on the side of the chassis 14, the restricting portions 26 protruding toward and abutted against the holding members 23. In this way, because the restricting portions 26 integrally provided on the side of the chassis 14 are abutted against the holding members 23, the positional relationship of the holding members 23 with respect to the LED boards 18 can be restricted in a good manner.

The restricting portions 26 are integrally provided to the chassis 14. In this way, because the restricting portions 26 are integrally provided to the chassis 14, the number of components and assembly steps can be decreased, which is preferable for cost reduction purpose, compared to if the restricting portions are provided as separate components from the chassis 14.

The restricting portions 26 are disposed at positions overlapping with the LED boards 18 in plan view, and the LED boards 18 have the through holes 18a allowing insertion of the restricting portions 26. In this way, when the LED boards 18 are housed in the chassis 14, the restricting portions 26 are inserted into the through holes 18a, to be positioned relative to the chassis 14. Thus, the LED boards 18 can be positioned relative to the chassis 14 prior to attaching the holding members 23.

The holding members 23 are provided with the main body portion 24 sandwiching the LED boards 18 with the chassis 14, and the fixing portion 25 protruding from the main body portion 24 toward the chassis 14 to be fixed to the chassis 14. The chassis 14 have the attaching holes 14c allowing insertion of the fixing portion 25. The attaching holes 14c have the restricting portions 26 at the edges thereof. In this way, when the fixing portion 25 is inserted into the attaching hole 14c in the chassis 14, the fixing portion 25 can be guided by the restricting portion 26 at the edge of the attaching hole 14c. Thus, improved workability can be attained when attaching the holding members 23.

The restricting portion 26 is formed in a ring shape along the edge of the attaching hole 14c. In this way, the strength of the restricting portions 26 can be maintained high to reliably restrict the positional relationship of the holding members 23 with respect to the LED boards 18.

The restricting portions 26 are made of a metal material. In this way, compared to if the restricting portions are made of a synthetic resin, generally a smaller linear coefficient of expansion and higher heat conductivity can be obtained. Thus, the restricting portions 26 are not easily expanded or contracted by thermal expansion or thermal contraction, to reliably restrict the positional relationship between the holding members 23 and the LED boards 18. In addition, the heat generated by the LEDs 17 on the LED boards 18 can be efficiently transmitted via the restricting portions 26 to the chassis 14. Therefore, excellent heat dissipation property can be obtained with regard to the LEDs 17.

The LED boards 18 have an elongated shape with the long side direction extending along the ends of the light guide member 19. The elongated LED boards 18 are more readily expanded or contracted by thermal expansion or thermal contraction in the long side direction, i.e., along the ends of the light guide member 19, than in the short side direction. Because the expansion or contraction of the LED boards 18 is allowed due to the gap generated by the restricting portions 26, deformation of the LED boards 18 is suppressed in a preferred manner, and changes in the positional relationship between the LEDs 17 and the light guide member 19 is unlikely to occur.

On the LED boards 18, a plurality of the LEDs 17 is disposed side by side in a line along the long side direction. In this way, the plurality of the LEDs 17 can be efficiently disposed on the LED boards 18, which is preferable for achieving high brightness.

The holding members 23 are disposed between the adjacent LEDs 17. In this way, the space between the adjacent LEDs 17 can be effectively utilized. Further, the holding members 23 can avoid obstructing the light emitted by the LEDs 17.

The holding members 23 are provided with the main body portion 24 sandwiching the LED boards 18 with the chassis 14, and the fixing portion 25 protruding from the main body portion 24 toward the chassis 14 to be fixed to the chassis 14. In this way, by fixing the fixing portion 25 to the chassis 14, the LED boards 18 sandwiched between the main body portion 24 and the chassis 14 can be appropriately held.

The LEDs 17 and the ends of the light guide member 19 opposed thereto are spaced apart from each other with a space therebetween. The space is enclosed between the pair of reflection sheets 20 and 21. In this way, the light emitted by the LEDs 17 is repeatedly reflected by the pair of reflection sheets 20 and 21 in the space provided between the LEDs 17 and the opposed ends of the light guide member 19. Therefore, the light can become incident on the ends of the light guide member 19 efficiently. Thus, the light utilization efficiency can be improved.

The light sources are the LEDs 17. In this way, high brightness and low power consumption can be achieved.

While the first embodiment of the present invention has been described above, the present invention is not limited to the embodiment and may include the following modifications. In the following modifications, components similar to those of the embodiment will be designated by the same reference signs and their description and illustration may be omitted.

### <First modification of the first embodiment>

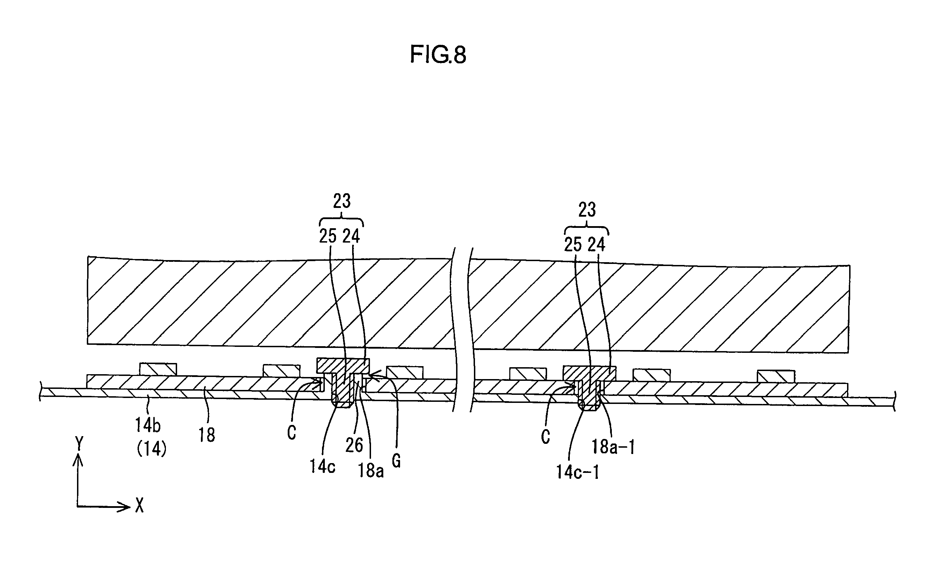

A first modification of the first embodiment will be described with reference to FIG. 8, in which the restricting portions 26 are provided for only one of two attaching holes 14c and 14c-1, namely for the attaching hole 14c.

As shown in FIG. 8, the restricting portion 26 is formed at the edges of the left side one of the two attaching holes 14c and 14c-1 provided for each LED board 18, namely the attaching hole 14c, not formed at the edges of the attaching hole 14c-1 on the right side in the figure. Thus, with regard to the holding member 23 attached to the attaching hole 14c-1 without restricting portion 26, the main body portion 24 is abutted against the LED board 18 without the gap G between with respect to the LED board 18. Accordingly, the LED board 18 can be retained without clattering in the Y-axis direction. On the other hand, the other attaching hole 14c is provided with the restricting portion 26, with the gap G between the main body portion 24 of the holding member 23 attached to the attaching hole 14c and the LED board 18. Thus, the LED board 18 can be prevented from being excessively pressed on in the Y-axis direction. Accordingly, the LED board 18 is allowed to be expanded or contracted by thermal expansion or thermal contraction to an appropriate extent in the direction along the main plate surfaces of the LED board 18, and thereby deformation such as warping or deflection can be prevented. A through hole 18a-1 aligned with the attaching hole 14c-1 without restricting portion 26 has a smaller diameter than the other through hole 18a with the predetermined clearance C between with the circumferential surface of the fixing portion 25.

### <Second modification of the first embodiment>

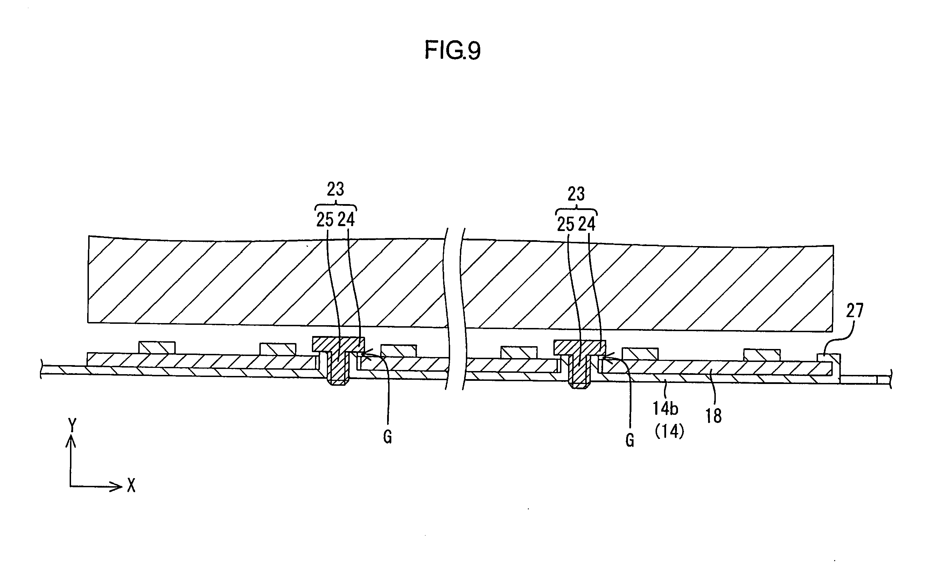

A second modification of the first embodiment will be described with reference to FIG. 9, in which sandwiching portions 27 for sandwiching the end of the LED boards 18 are provided.

As shown in FIG. 9, on the long-side side plates 14b of the chassis 14, the sandwiching portions 27 are integrally provided to sandwich the respective right-side one of the ends of the LED boards 18 in the long side direction in the figure. The sandwiching portions 27 have a hook-shaped cross section, which are formed by cutting and raising the side plates 14b. The sandwiching portions 27 are configured to hold the one end of the LED boards 18 in the long side direction between the sandwiching portions 27 and the side plates 14b with respect to the Y-axis direction. Thus, clattering in the Y-axis direction of the LED boards 18 with the gap G between with the main body portion 24 of the holding members 23 is less likely to occur. On the other hand, the other end of the LED boards 18 in the long side direction is not sandwiched by the sandwiching portions 27. Therefore, the expansion or contraction of the LED boards 18 due to thermal expansion or thermal contraction in the direction along the main plate surfaces can be allowed to an appropriate extent.

As described above, according to the present modification, the one end of the LED boards 18 in the long side direction is sandwiched between the sandwiching portions 27 and the chassis 14. By thus holding the LED boards 18 with the gap G from the holding members 23 between the sandwiching portions 27 and the chassis 14, clattering of the LED boards 18 is less likely to occur. On the other hand, the other end of the LED boards 18 in the long side direction is not sandwiched by the sandwiching portions 27, and therefore, the expansion or contraction of the LED boards 18 due to thermal expansion or thermal contraction can be appropriately allowed. As a result, deformation of the LED boards 18, such as warping or deflection is unlikely to occur.

### <Third modification of the first embodiment>

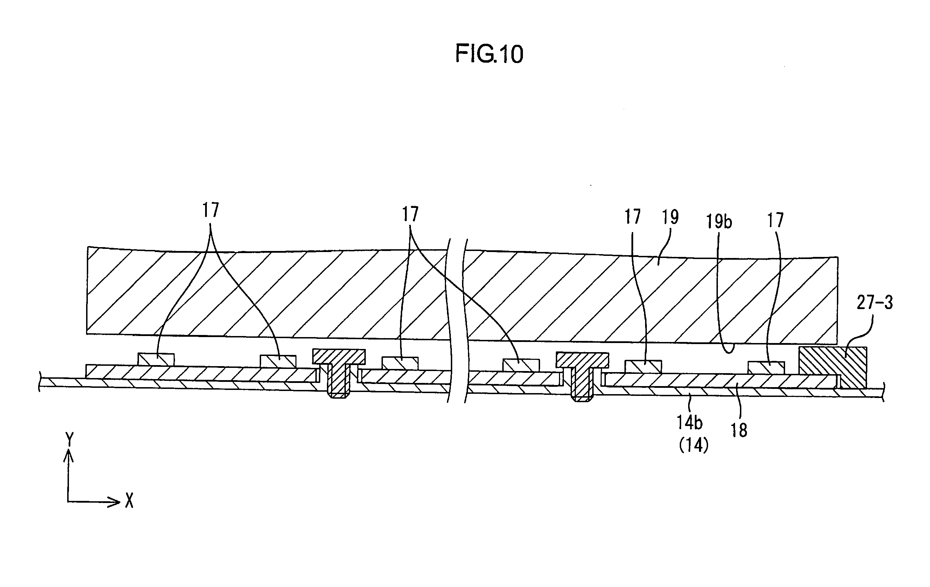

A third modification of the first embodiment will be described with reference to FIG. 10, in which sandwiching portions 27-3 have a configuration modified from that of the second modification.

As shown in FIG. 10, the sandwiching portion 27-3 according to the present modification is disposed between the respective long-side side plates 14b of the chassis 14 and the light incident surface 19b of the light guide member 19. Specifically, the sandwiching portions 27-3 are separate components from the chassis 14 and have a generally hook-shaped cross section. One end of the sandwiching portions 27-3 is fixed to the respective long-side side plates 14b at a position apart from the LED boards 18, while the other end is disposed between the LED board 18 and the light incident surface 19b of the light guide member 19, sandwiching the end of the LED boards 18 in the long side direction with the side plates 14b. Thus, the sandwiching portions 27-3 are abutted against the light incident surfaces 19b, thereby preventing the light incident surfaces 19b from being further displaced toward the LEDs 17 when the light guide member 19 is expanded or contracted by thermal expansion or thermal contraction. Accordingly, a constant positional relationship can be maintained between the light incident surfaces 19b and the LEDs 17 with respect to the Y-axis direction. Therefore, the light incident efficiency from the LEDs 17 on the light incident surfaces 19b can be stabilized, and thereby uneven brightness can be prevented in a more preferred manner.

As described above, according to the present modification, the sandwiching portion 27-3 is disposed between the light guide member 19 and the LED board 18. In this way, when thermal expansion is caused in the light guide member 19, the positional relationship of the light guide member 19 with respect to the LED boards 18 and the LEDs 17 can be restricted by the sandwiching portions 27-3 disposed between the light guide member 19 and the LED boards 18. Thus, the light incident efficiency from the LEDs 17 on the light guide member 19 can be stabilized, and therefore, uneven brightness in output light is less likely to occur.

### <Second embodiment>

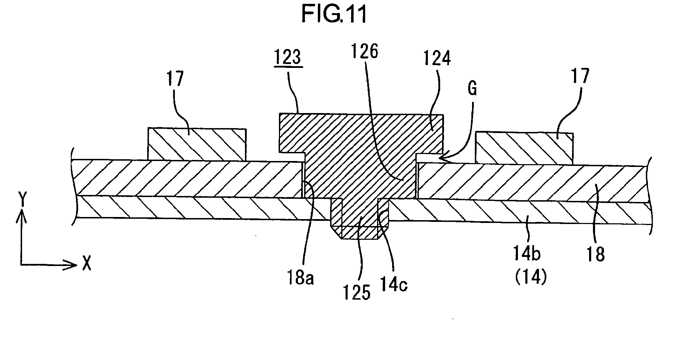

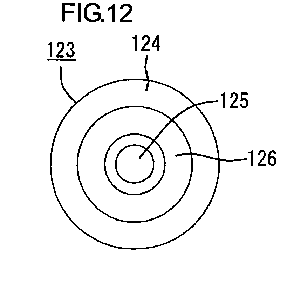

A second embodiment of the present invention will be described with reference to FIG. 11 or 12. In the second embodiment, a restricting portion 126 is integrally provided on the side of holding members 123. Redundant description of structures, operations, and effects similar to those of the first embodiment will be omitted.

As shown in FIG. 11, the restricting portion 126 is integrally formed with the holding member 123, which are made of a metal. Specifically, the restricting portion 126 is continuous with both a main body portion 124 and a fixing portion 125 and, as shown in FIG. 12, has a ring shape surrounding the fixing portion 125 throughout the circumference thereof. When the restricting portion 126 is abutted against the edges of the attaching holes 14c of the long-side side plates 14c of the chassis 14, the gap G is provided between the outer circumferential end portion of the main body portion 124 and the edge of the through hole 18a of the LED board 18. Thus, the expansion or contraction of the LED boards 18 due to thermal expansion or thermal contraction can be appropriately allowed.

As described above, according to the present embodiment, the restricting portion 126 is integrally provided on the side of the holding member 123, to protrude toward and abutted against the chassis 14. By thus abutting the restricting portion 126 integrally provided on the side of the holding members 123 against the chassis 14, the positional relationship of the holding members 123 with respect to the LED boards 18 can be restricted in a good manner.

Further, the restricting portion 126 is integrally provided to the holding member 123. In this way, compared to if the restricting portion is provided as a separate component from the holding member 123, the number of components and assembly steps can be decreased, which is preferable for cost reduction.

The holding member 123 is provided with the main body portion 124 sandwiching the LED boards 18 with the chassis 14, and the fixing portion 125 protruding from the main body portion 124 toward the chassis 14 to be fixed to the chassis 14. The restricting portion 126 is provided to the main body portion 124. In this way, when the fixing portion 125 is fixed to the chassis 14, the LED boards 18 sandwiched between the main body portion 124 and the chassis 14 are retained in a preferred manner. At this time, the positional relationship of the holding members 123 with respect to the LED boards 18 can be appropriately restricted by the restricting portion 126 provided to the main body portion 124.

The restricting portion 126 is continuous with the fixing portion 125. In this way, compared to the case if the restricting portion is independent from the fixing portion 125, the strength of the restricting portion 126 and the fixing portion 125 can be increased.

The restricting portion 126 surrounds the fixing portion 125. In this way, the strength of the restricting portion 126 and the fixing portion 125 can be further increased.

While the second embodiment of the present invention has been described, the present invention is not limited to the embodiment and may also include the following exemplary modifications. In the following modifications, members similar to those of the embodiment will be designated with similar reference signs and their description and illustration may be omitted.

### <First modification of the second embodiment>

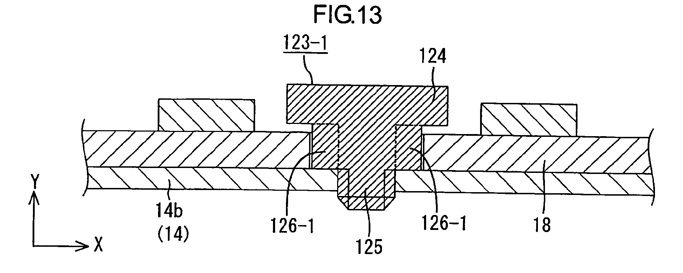

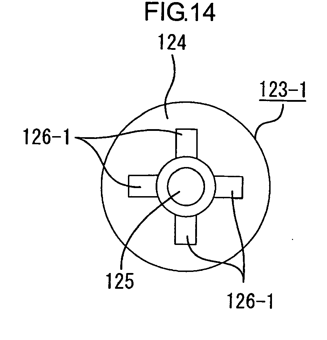

A first modification of the second embodiment will be described with reference to FIG. 13 or 14, in which restricting portions 126-1 have a modified configuration.

As shown in FIGS. 13 and 14, four restricting portions 126-1 are disposed on the circumferential surface of the fixing portion 125 intermittently along the circumference thereof. Specifically, the four restricting portions 126-1 have a substantially block-like shape and are disposed on the circumferential surface of the fixing portion 125 at 90-degree angular intervals. The restricting portions 126-1 are continuous with both the main body portion 124 and the fixing portion 125.

As described above, according to the present modification, a plurality of the restricting portions 126-1 is disposed on the circumferential surface of the fixing portion 125 intermittently along the circumference thereof. In this way, compared to if the fixing portion 125 is surrounded by the restricting portion, the material cost for the holding members 123-1 can be decreased.

Further, the plurality of the restricting portions 126-1 is disposed at substantially equal angular intervals on the circumferential surface of the fixing portion 125. In this way, the plurality of the restricting portions 126-1 can be stably abutted against the chassis 14, and therefore, the positional relationship of the holding members 123-1 with respect to the LED boards 18 can be more appropriately restricted.

### <Second modification of the second embodiment>

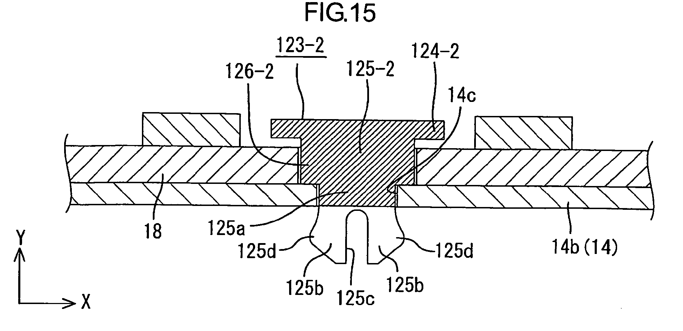

A second modification of the second embodiment will be described with reference to FIG. 15, in which holding members 123-2 are made of a synthetic resin, and a fixing portion 125-2 has a modified configuration.

As shown in FIG. 15, the holding members 123-2 are made of a synthetic resin such as polycarbonate, and have a white surface which provides excellent optical reflectivity. The fixing portion 125-2 of the holding member 123-2 includes a shaft portion 125a protruding from a main body portion 124-2. The end of the shaft portion 125a is provided with a groove 125c to provide a plurality of elastic locking parts 125b. The elastic locking parts 125b are of cantilever shape, configured to be elastically deformed into the groove 125c with the proximal end of the protrusion from the shaft portion 125a as the fulcrum. Thus, the groove 125c provides a space for allowing deflection of the elastic locking parts 125b. On the outside surface of the elastic locking parts 125b, locking portions 125d bulge away from the groove 125c. The locking portions 125d protrude further outward beyond the outer circumferential surface of the shaft portion 125a, with the diameter (maximum diameter) of the fixing portion 125-2 at the bulging end larger than the diameter of the attaching holes 14c. Thus, when the fixing portion 125-2 is inserted into the attaching hole 14c, the elastic locking parts 125b are temporarily deformed to be withdrawn into the groove 125c. If the fixing portion 125-2 is further inserted into the attaching hole 14c so as to reach a normal depth, the elastic locking part 125b elastically returns to its original shape, such that the locking portion 125d is locked on the edge of the attaching hole 14c from the outside. In this way, the holding members 123-2 can be retained in the attached state with respect to the chassis 14. A restricting portion 126-2 is continuous with both the main body portion 124-2 and the fixing portion 125-2, as in the second embodiment and the first modification of the second embodiment.

As described above, according to the present modification, the holding members 123□2 are made of a synthetic resin material. In this way, structural design and formation can be simplified when manufacturing the holding member 123-2 integral with the restricting portion 126-2.

The fixing portion 125-2 penetrates the chassis 14 and is locked on the chassis 14 from an opposite side to the LED boards 18. In this way, by locking the fixing portion 125-2 through and on the chassis 14, the holding members 123-2 and the LED boards 18 can be fixed at low cost and simply without using other fixing means, such as an adhesive.

### <Third modification of the second embodiment>

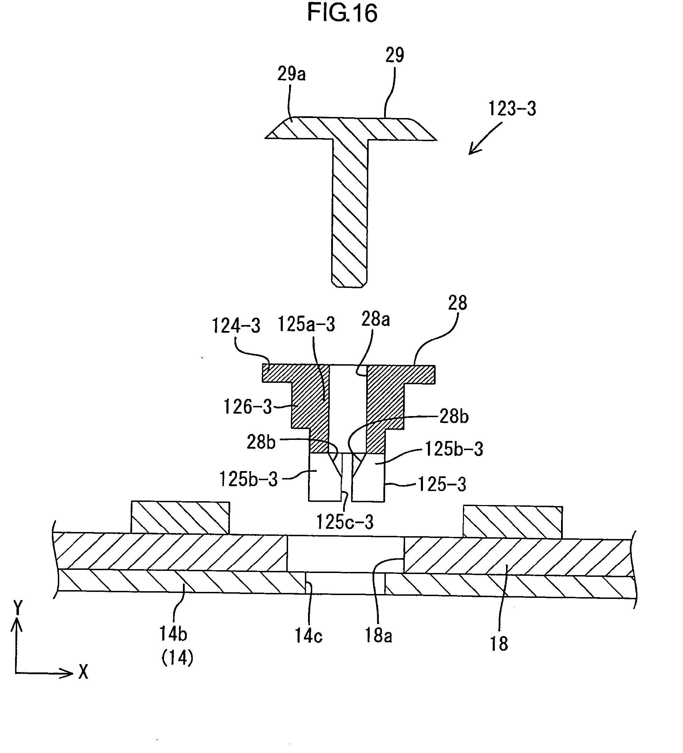

A third modification of the second embodiment will be described with reference to FIGS. 16 to 18, in which holding members 123-3 made of a synthetic resin have a structure modified from the second modification.

As shown in FIG. 16, the holding members 123-3 have a two-part configuration including: a first component 28 including a main body portion 124-3 and a fixing portion 125-3; and a second component 29 which is detachably assembled to the first component 28 from the front side. The first component 28 has a mount opening 28a on the front side for enabling the mounting of the second component 29. The mount opening 28a penetrates the main body portion 124-3 of the first component 28 and has a depth corresponding to the entire length of a base portion 125a-3 of the fixing portion 125-3. Thus, the mount opening 28a is communicated with a groove 125c-3 formed in the fixing portion 125-3. In other words, the mount opening 28a is also opened on the rear side via the groove 125c-3. The mount opening 28a has a circular cross section. On the respective inner surfaces of elastic locking parts 125b-3 forming the fixing portion 125-3, inclined surface 28b continuously provided from the mount opening 28a is provided. The inclined surface 28b is disposed at the proximal end of the protrusion of the elastic locking parts 125b-3. The inclined surface 28b is inclined gradually inward from the proximal ends of the protrusion of the elastic locking parts 125b-3 as the inclined surface 28b extends toward the distal end of the protrusion. Thus, the proximal end portion of the protrusion of the elastic locking parts 125b-3 is thinner toward the proximal end and thicker toward the distal end. The fixing portion 125-3 has a substantially constant diameter along its entire length, which is slightly smaller than the attaching hole 14c in the chassis 14. The elastic locking parts 125b-3 do not have the locking portions 125d according to the second modification. The main body portion 124-3 is integrally provided with a restricting portion 126-3. The restricting portion 126-3 surrounds the base portion 125a-3 of the fixing portion 125-3 and is continuous with the base portion 125a-3. The through holes 18a of the LED boards 18 have a diameter allowing the insertion of the fixing portion 125-3 and the restricting portion 126-3, which is smaller than the attaching holes 14c.

The second component 29 has a substantially T-shaped cross section and includes a base portion 29a parallel with the main body portion 124-3 of the first component 28 in an assembled state, and a shaft portion 29b protruding from the base portion 29a toward the rear side. The base portion 29a has a substantially circular shape in plan view and is of substantially the same size as the main body portion 124-3 of the first component 28. On the other hand, the shaft portion 29b has a substantially cylindrical shape with a substantially constant diameter along its entire length. The length of protrusion of the shaft portion 29b from the base portion 29a is substantially same as the size of the first component 28 in the Z-axis direction. The shaft portion 29b has a diameter slightly smaller than the mount opening 28a of the first component 28, allowing the shaft portion 29b to be inserted into or pulled out of the mount opening 28a.

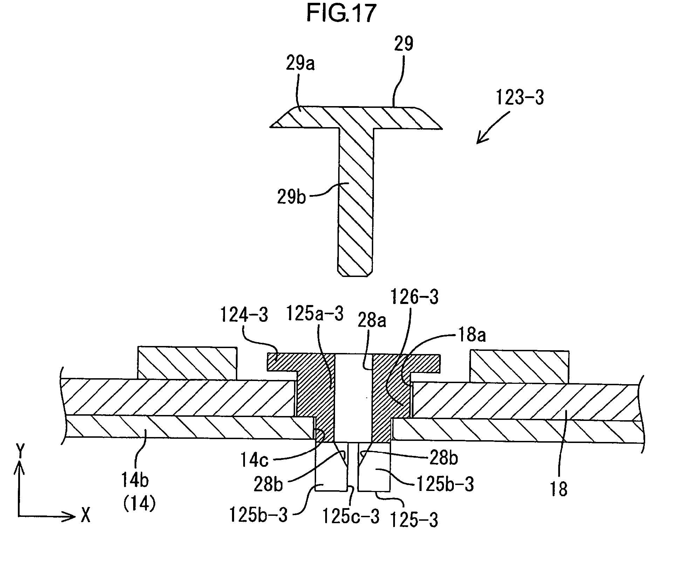

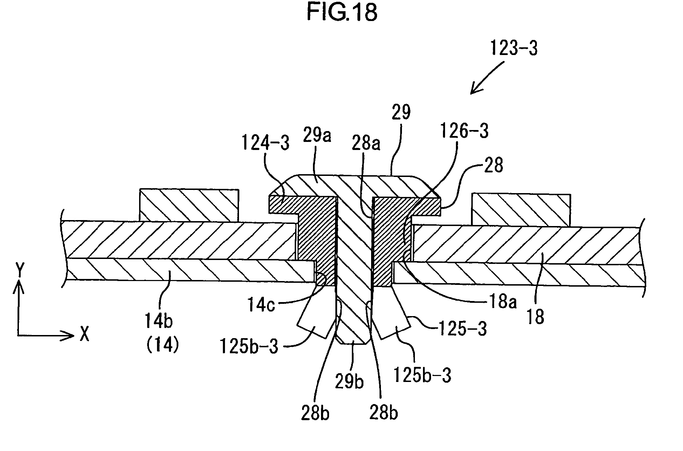

Next, an attachment of the holding members 123-3 with the above configuration to the chassis 14 will be described. First, as shown in FIG. 17, the first component 28 is attached to the long-side side plate 14b of the chassis 14. At this time, the fixing portion 125-3 and the restricting portion 126-3 of the first component 28 are inserted into the through hole 18a of the LED board 18, and then the protruding end surface of the restricting portion 126-3 is abutted against the edge of the attaching hole 14c of the side plates 14b, while the fixing portion 125-3 is inserted into the respective attaching holes 14c of the side plates 14b. In this state, the fixing portion 125-3 is in a non-locked state with respect to the side plates 14b of the chassis 14. Then, the second component 29 is mounted on the first component 28 from the front side. The shaft portion 29b of the second component 29 is inserted into the mount opening 28a of the first component 28 from the front side. Upon reaching a predetermined depth, the end of the shaft portion 29b is abutted against the inclined surfaces 28b of the elastic locking parts 125b-3. From this state, as the second component 29 is further inserted, the inclined surfaces 28b are pressed by the end of the shaft portion 29b, as shown in FIG. 18, whereby the elastic locking parts 125b-3 are elastically deformed outward as the front end of the shaft portion 29b is guided along the inclination. Thus, the elastic locking parts 125b-3 are elastically deformed outward by the shaft portion 29b and thereby locked on the edges of the attaching holes 14c. The inward elastic return (deformation to be closed) into the original shape of the elastic locking part 125b-3 is restricted by the shaft portion 29b disposed inside the elastic locking parts 125b-3. In this way, the holding members 123-3 are prevented from being readily inadvertently detached from the chassis 14. Preferably, the elastic locking parts 125b-3 may be plastically deformed when the elastic locking parts 125b-3 are pushed out by the shaft portion 29b.

As described above, according to the present modification, the fixing portion 125-3 includes the elastic locking parts that can be elastically deformed and locked on the opposite side to the LED boards 18 while penetrating the chassis 14. The holding members 123-3 include the first component 28 with the main body portion 124-3 and the fixing portion 125-3, and the second component 29 mounted on the first component 28 and restricting the elastic deformation of the elastic locking parts 125b-3. When attaching the holding members 123-3 to the chassis 14, the second component 29 is mounted on the first component 28 which is previously attached to the chassis 14. In this way, the holding members 123-3 can be retained in an anti-falling state as the elastic deformation of the elastic locking parts 125b-3 penetrating the chassis 14 and locked on the opposite side to the LED boards 18 is restricted. When detaching the holding members 123-3 from the chassis 14, the second component 29 is removed from the first component 28 to allow the elastic deformation of the elastic locking parts 125b-3 into their original shapes, and thereafter the first component 28 is detached. Thus, the holding members 123-3 can be easily attached to or detached from the chassis 14 by attaching or detaching the second component 29 to or from the first component 28 without using a special tool, thereby providing excellent workability. Particularly, excellent working efficiency can be obtained during a disassembling operation for maintenance or discard of the backlight unit 12, for example.

### <Third embodiment>

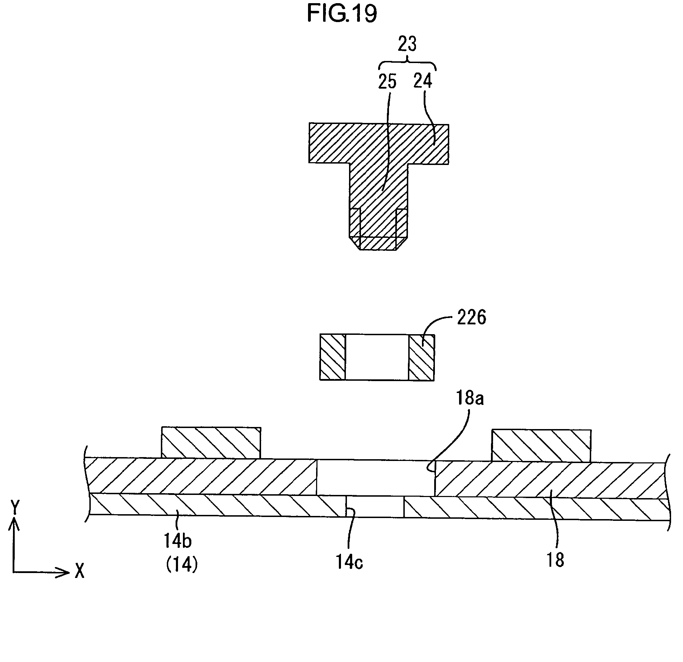

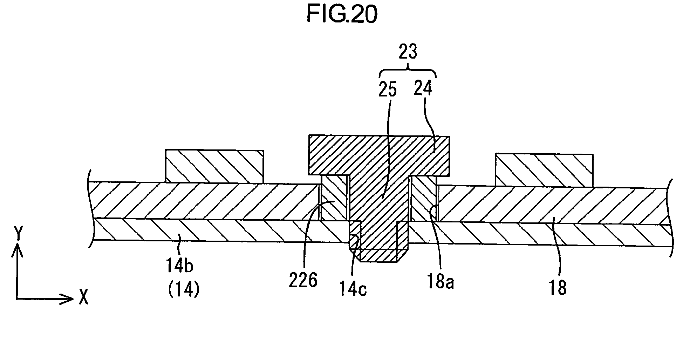

A third embodiment of the present invention will be described with reference to FIG. 19 or 20. In the third embodiment, restricting portions 226 are provided as separate components from the holding members 23 and the chassis 14. Redundant description of structures, operations, and effects similar to those of the first embodiment will be omitted.

As shown in FIG. 19, the restricting portions 226 are separate components from the holding members 23 and the chassis 14, and are made of a metal material such as iron or aluminum. The restricting portion 226 has a ring shape to surround the fixing portion 25 of the holding member 23 throughout the circumference of the fixing portion 25. The restricting portions 226 have an internal diameter slightly greater than the diameter of the fixing portion 25, allowing the insertion and removal of the fixing portion 25. The restricting portions 226 have a thickness greater than the plate thickness of the LED boards 18 to provide the gap G corresponding to the difference in thickness between the main body portion 24 and the LED boards 18. The through hole 18a of the LED board 18 has a diameter greater than the outer diameter of the restricting portion 226.

When the LED boards 18 are attached to the chassis 14, the restricting portions 226 are inserted into the through holes 18a to fit on the side plates 14b, with communication between the respective through holes 18a of the LED boards 18 and the respective attaching holes 14c of the side plates 14b of the chassis 14, as shown in FIG. 20. Then, the holding member 23 is inserted into the hole of the restricting portion 226 and fastened to the attaching hole 14c. Thus, the gap G is ensured between the main body portion 24 and the LED board 18 by the restricting portions 226. The fixing portion 25 of the holding member 23 may be inserted into the restricting portion 226 first.

As described above, according to the present embodiment, the restricting portion 226 is separate from the chassis 14 and the holding members 23 and is disposed between the chassis 14 and the holding member 23. In this way, because the restricting portion 226 is separate from the chassis 14 and the holding members 23, the degree of freedom in the material or shape, for example, of the restricting portion 226 can be increased. Specifically, when iron is selected as the material of the chassis 14 for manufacturing cost reason, for the restricting portions 226, it is preferable to use a metal material with a smaller linear coefficient of expansion and larger heat conductivity than iron, such as aluminum. In this way, the positional relationship of the holding members 23 with respect to the LED boards 18 can be reliably restricted and excellent heat dissipating performance can be obtained.

### <Other embodiments>

The present invention is not limited to the embodiments above described and illustrated with reference to the drawings, and the following embodiments may be included in the technical scope of the present invention.
(1) While in the foregoing embodiments other than the first modification of the second embodiment, the restricting portions have a circular endless ring-shape in plan view, the restricting portions may have a quadrangular or elliptical endless ring-shape in plan view, or a ring-shape with terminal ends (such as C-shape) in plan view, and such configurations are also included in the present invention. The present invention further includes configurations in which the restricting portions are in the form of dots or lines (such as straight lines or curved lines) in plan view. The present invention also includes configurations in which the restricting portions are cylindrical, rectangular-columnar, conical, or pyramidal, and configurations in which the restricting portions have a mountain-like (triangular), semicircular, or elliptical cross sectional shape.

(2) While in the first modification of the second embodiment, the four block-shaped restricting portions are disposed on the circumferential surface of the fixing portion at equal angular intervals, the number of the restricting portions may be three or less or five or more, or the restricting portions may be disposed on the circumferential surface of the fixing portion at non-equal angular intervals, and such configurations are also included in the present invention.

(3) While in the foregoing embodiments the restricting portions are disposed adjacent to the fixing portion in plan view, the restricting portions may be disposed at a position spaced apart from the fixing portion in plan view, and such a configuration is also included in the present invention. In this case, when the restricting portions are integrally formed with the holding member, as in the second embodiment, the restricting portions and the fixing portion are disposed separately and independently from each other. Further, as the restricting portions and the fixing portion are spaced apart from each other, the LED boards need to have separate through holes for the restricting portions and the fixing portion respectively.

(4) In the foregoing embodiments the fixing portion and the restricting portions are disposed at positions overlapping with the LED boards in plan view, with the corresponding through holes provided in the LED boards. Preferably, the fixing portion and the restricting portions may be disposed at positions that do not overlap with the LED boards in plan view. In this case, the LED boards may not have the through holes.

(5) Other than (4), one of the fixing portion and the restricting portions may be disposed at a position overlapping with the LED boards in plan view while the other may be disposed at a position not overlapping with the LED boards in plan view.

(6) While in the first and the second embodiments, the restricting portions are provided to either the chassis or the holding members, the restricting portions may be provided to both the chassis and the holding members. In this case, the respective restricting portions on both sides may be disposed in such a manner as to overlap with each other in plan view and configured to be abutted against each other such that the positional relationship between the holding members and the extending members can be restricted.

(7) While in the foregoing embodiments only the LED boards are disposed between the main body portion of the holding members and the side plates of the chassis, another member may be disposed therebetween together with the LED boards. For example, when a reflection sheet with excellent light reflectivity is placed on the side of the LED boards on which the LEDs are mounted, the LED boards and the reflection sheet are disposed between the main body portion and the side plates. Further, when a sheet-like heat dissipating member for facilitating heat dissipation is disposed between the LED boards and the side plates of the chassis, the LED boards and the heat dissipating member are disposed between the main body portion and the side plates.

(8) While in the foregoing embodiments the LED boards are disposed on the long sides of the chassis and attached to the long-side side plates with the holding members, the LED boards may be disposed on the short sides of the chassis and attached to the short-side side plates with the holding members. In this case, the short-side side plates may have the attaching holes.

(9) While in the foregoing embodiments a pair of LED boards is disposed on the long sides of the chassis, the LED boards may be disposed on only one of the long sides. Similarly, the LED boards may be disposed on only one of the short sides of the chassis.

(10) While in the foregoing embodiments the LED boards of the one-side mounted type are used, the LED boards of a double-side mounted type may be used.

(11) While in the foregoing embodiments one LED board is attached to each side plate of the chassis, a plurality of LED boards may be attached to each side plate, and such a configuration is also included in the present invention. In this case, preferably at least one holding member is attached to each LED board.

(12) While in the foregoing embodiments two holding members are attached to one LED board, one holding member may be attached to one LED board, or three or more holding members may be attached to one LED board, which are also included in the present invention.

(13) While in the foregoing embodiments other than the second and the third modifications of the second embodiment, the holding members made of a metal are used, the holding members made of a synthetic resin may be used in the embodiments other than the second and the third modifications of the second embodiment. Similarly, the holding members made of a metal may be used in the second and the third modifications of the second embodiment.

(14) The shape of the main body portion of the holding member may be appropriately modif ied from the foregoing embodiments. Specifically, the main body portion may have an elliptical shape or a quadrangular shape (a rectangular shape or a square shape) in plan view, which is also included in the present invention.

(15) While in the foregoing embodiments the holding members are disposed between the adjacent LEDs on the LED boards, the holding members may be disposed closer to the end of the LED boards than the endmost LED, which is also included in the present invention.

(16) The attaching position of the holding members with respect to the LED boards may be appropriately modified from the foregoing embodiments.

(17) In the second modification of the second embodiment, as the attaching structure of the holding members made of a synthetic resin to the chassis, the fixing portion of insertion type is adopted. A sliding type of attaching structure may be adopted. The sliding type of attaching structure refers to the structure including a hook-shaped fixing portion, of which a main body portion is pushed toward the bottom plate of the chassis and then slide along the bottom plate, thereby causing the hook-shaped portion of the fixing portion to be locked on the edges of the attaching hole.

(18) In the second modification of the second embodiment, the fixing portion of the holding members made of a synthetic resin is locked on the chassis through the attaching hole. The specific method of fixing the fixing portion on the chassis may be appropriately modified. For example, the attaching hole and the elastic locking part may be omitted, and the base portion inserted into the through hole of the LED boards may be fixedly attached to the inner wall surface of the chassis by using an adhesive, which is also included in the present invention. In this case, means other than an adhesive, such as deposition or welding, may be adopted.

(19) In the foregoing embodiments, the LEDs are of the type including the LED chips that emits light of the single color of blue and configured to emit white light by using a phosphor. The present invention also includes a configuration in which the LEDs are of the type including LED chips that emits light of the single color of ultraviolet and configured to emit white light by using a phosphor.

(20) In the foregoing embodiments, the LEDs are of the type including an LED chips that emits light of the single blue color and configured to emit white light by using a phosphor. However, the present invention also includes a configuration in which the LEDs are of the type including three types of LED chips that emit light of the single color of R (red), G (green), or B (blue), respectively. In addition, the present invention also includes a configuration in which the LEDs are of the type including three types of LED chips that emit the single colors of C (cyan), M (magenta), or Y (yellow), respectively.

(21) While in the foregoing embodiments the LEDs that emit white light are used, a LED that emits red light, a LED that emits blue light, and a LED that emits green light may be used in an appropriate combination.

(22) While in the foregoing embodiments the LEDs are used as light sources by way of example, a configuration in which a point light source other than a LED is used is also included in the present invention.

(23) In the foregoing embodiments, the liquid crystal panel and the chassis are vertically disposed with their short side directions aligned with the vertical direction, by way of example. The present invention also includes a configuration in which the liquid crystal panel and the chassis are vertically disposed with their long side directions aligned with the vertical direction.

(24) In the foregoing embodiments, as the switching elements of the liquid crystal display device, TFTs are used. The present invention, however, may be applied to liquid crystal display devices using switching elements other than TFTs (such as thin-film diodes (TFD)). Further, the present invention may be applied not only to a liquid crystal display device for color display but also to a liquid crystal display device for monochrome display.

(25) While in the foregoing embodiments liquid crystal display devices using a liquid crystal panel as a display panel has been described by way of example, the present invention may be applied to display devices using other types of display panels.

(26) While in the foregoing embodiments a television receiver with a tuner has been described by way of example, the present invention may be applied to a display device without a tuner.

### EXPLANATION OF SYMBOLS

10: Liquid crystal display device (Display device)
11: Liquid crystal panel (Display panel)
12: Backlight unit (Lighting device)
14: Chassis
14c: Attaching hole
17: LED (Light source)
18: LED board (light source board)
18a: Through hole
19: Light guide member
20: First reflection sheet (Reflection member)
21: Second reflection sheet (Reflection member)
23, 123: Holding member
24,124: Main body portion
25, 125: Fixing portion
26, 126, 226: Restricting portion
27: Sandwiching portion
28: First component
29: Second component
C: Clearance
G: Gap
TV: Television receiver

## Claims

1. A lighting device comprising:
a light source board including a light source;
a light guide member having an end portion facing the light source;
a chassis housing the light source board and the light guide member;
a holding member fixed to the chassis with having the light source board therebetween; and
a restricting portion restricting positional relationship of the holding member with respect to the light source board to provide a gap between the holding member and the light source board.

2. The lighting device according to claim 1, wherein:
the restricting portion is disposed at a position overlapping with the light source board in a plan view; and
the light source board has a through hole through which the restricting portion is inserted.

3. The lighting device according to claim 2, wherein:
the holding member includes a main body portion and a fixing portion, the main body portion and the chassis having the light source board therebetween, and the fixing portion protruding from the main body portion toward the chassis and fixed to the chassis; and
both the fixing portion and the restricting portion are inserted through the through hole.

4. The lighting device according to claim 3, wherein the restricting portion is disposed adjacent to the fixing portion in a plan view.

5. The lighting device according to any one of claims 2 to 4, wherein the through hole has a peripheral edge and the peripheral edge and a circumferential surface of the restricting portion have a clearance therebetween.

6. The lighting device according to any one of claims 1 to 5, wherein the restricting portion is integrally provided on a chassis side to protrude toward and abut against the holding member.

7. The lighting device according to claim 6, wherein the restricting portion is integrally provided to the chassis.

8. The lighting device according to one of claims 6 and 7, wherein:
the restricting portion is disposed at a position overlapping with the light source board in a plan view; and
the light source board has a through hole through which the restricting portion is inserted.

9. The lighting device according to any one of claims 6 to 8, wherein:
the holding member includes a main body portion and a fixing portion, the main body portion and the chassis have the light source board therebetween, and the fixing portion protrudes from the main body portion toward the chassis and fixed to the chassis;
the chassis has an attaching hole through which the fixing portion is inserted; and
the restricting portion is disposed on a peripheral edge portion of the attaching hole.

10. The lighting device according to claim 9, wherein the restricting portion is formed in a ring shape along the peripheral edge portion of the attaching hole.

11. The lighting device according to any one of claims 1 to 5, wherein the restricting portion is provided separate from the chassis and the holding member, and disposed between the chassis and the holding member.

12. The lighting device according to any one of claims 1 to 5, wherein the restricting portion is integrally provided on a holding member side to protrude toward and abut against the chassis.

13. The lighting device according to claim 12, wherein the restricting portion is integrally provided to the holding member.

14. The lighting device according to claim 13, wherein:
the holding member includes a main body portion and a fixing portion, the main body portion and the chassis have the light source board therebetween, and the fixing portion protrudes from the main body portion toward the chassis and fixed to the chassis; and
the restricting portion is provided to the main body portion.

15. The lighting device according to claim 14, wherein the restricting portion is formed continuously from the fixing portion.

16. The lighting device according to claim 15, wherein the restricting portion surrounds the fixing portion.

17. The lighting device according to claim 15, wherein the restricting portion includes a plurality of restricting portions and the restricting portions are disposed on a circumferential surface of the fixing portion intermittently with respect to a circumferential direction.

18. The lighting device according to claim 17, wherein the restricting portions are disposed on the circumferential surface of the fixing portion at substantially equal angular intervals.

19. The lighting device according to any one of claims 13 to 18, wherein the holding member is made of a synthetic resin material.

20. The lighting device according to any one of claims 1 to 18, wherein the restricting portion is made of a metal material.

21. The lighting device according to any one of claims 1 to 20, wherein the light source board has an elongated shape having a long side extending along the end portion of the light guide member.

22. The lighting device according to claim 21, further comprising a supporting portion supporting one of elongated ends of the light source board , the supporting portion and the chassis supporting the one elongated end therebetween.

23. The lighting device according to claim 22, wherein the supporting portion is disposed between the light guide member and the light source board.

24. The lighting device according to any one of claims 21 to 23, wherein the light source includes a plurality of light sources and the light sources are arranged on the light source board along the long side.

25. The lighting device according to claim 24, wherein the holding member is disposed between the adjacent light sources.

26. The lighting device according to any one of claims 1 to 25, wherein the holding member includes a main body portion and a fixing portion, the holding member and the chassis have the light source board therebetween, and the fixing portion protrudes from the main body portion toward the chassis to be fixed to the chassis.

27. The lighting device according to claim 26, wherein the fixing portion penetrates the chassis and is stopped by a surface of the chassis opposite to a surface on which the light source board is provided.

28. The lighting device according to one of claims 26 and 27, wherein:
the fixing portion includes an elastically deformable locking part penetrating the chassis and locked on a surface of the chassis opposite to a surface on which the light source board is provided; and
the holding member is configured with a first component including the main body portion and the fixing portion, and a second component attached to the first component and restricting elastic deformation of the elastic locking part.

29. The lighting device according to any one of claims 1 to 28, wherein the light source and the end portion of the light guide member facing the light source are spaced apart from each other with a space therebetween,
the lighting device further comprising a pair of reflection members having the space therebetween.

30. The lighting device according to any one of claims 1 to 29, wherein the light source is a LED.

31. A display device comprising:
the lighting device according to any one of claims 1 to 30; and
a display panel configured to provide a display by utilizing light from the lighting device.

32. The display device according to claim 31, wherein the display panel is a liquid crystal panel including a pair of substrates with liquid crystal sealed between.

33. A television receiver comprising the display device according to one of claims 31 and 32.
